# EUROPÄISCHE PATENTSCHRIFT

(11) **EP 4 293 881 B1**
(45) Veröffentlichungstag und Bekanntmachung des Hinweises auf die Patenterteilung: **28.10.2026**
(21) Anmeldenummer: 23179122.9
(22) Anmeldetag: 14.06.2023
(51) Int. Cl.: H02K 3/34, H02K 3/52, H02K 5/22, H02K 11/25, H02K 15/12

(54) **ELEKTROMOTOR, KÜCHENMASCHINE UND HERSTELLUNGSVERFAHREN**
ELECTRIC MOTOR, FOOD PROCESSOR AND METHOD OF MANUFACTURING
MOTEUR ÉLECTRIQUE, ROBOT DE CUISINE ET PROCÉDÉ DE FABRICATION

(30) Priorität: 15.06.2022 EP 22179240
(43) Veröffentlichungstag der Anmeldung: 20.12.2023
(73) Patentinhaber: Vorwerk & Co. Interholding GmbH, 42275 Wuppertal (DE)
(72) Erfinder: Schmidt, Dirk, 51688 Wipperfürth (DE); Seibt, Patrick, 40789 Monheim am Rhein (DE)
(74) Vertreter: Von Rohr Patentanwälte Partnerschaft mbB

(56) Entgegenhaltungen:
- EP-A1- 1 420 499
- EP-A1- 1 557 928
- EP-A1- 4 007 125
- US-A- 5 829 120
- US-A1- 2011 290 581
- US-A1- 2016 172 916
- US-A1- 2019 058 366

## Beschreibung

Die vorliegende Erfindung betrifft einen Elektromotor, insbesondere für eine Küchenmaschine, eine Küchenmaschine mit einem Elektromotor sowie ein Verfahren zur Herstellung eines Elektromotors.

Elektromotoren, beispielsweise in Form von bürstenlosen Gleichstrommotoren, sind aus dem Stand der Technik bekannt und weisen einen Ständer/Stator und einen relativ zum Stator rotierenden Läufer/Rotor auf. Bei bürstenlosen Gleichstrommotoren ist der Stator mit Statorspulen und der Rotor mit Permanentmagneten bestückt.

Die Permanentmagneten können hierbei außen am Rotorkern (SPM - Surface Permanent Magnet) oder im Rotorkern vorgesehen bzw. eingebettet sein (IPM - Interior Permanent Magnet).

Die EP 1 420 499 A1 offenbart einen Rotorkörper mit Permanentmagneten, die in Schlitzen eingebettet und speichenartig angeordnet sind, insbesondere für einen BLDC-Motor. An ihrem äußeren Ende haben die Schlitze jeweils einen Abschnitt mit vergrößerter Breite, der den Magnetfluss verbessern soll. Die Abschnitte zwischen den Magneten können jeweils eine konvexe Form haben, die ebenfalls die magnetischen Eigenschaften verbessern soll.

Die US 2016/0172916 A1 offenbart einen Rotor mit Permanentmagneten, insbesondere für Stromgeneratoren. Der Rotor hat einen Körper, der aus übereinandergelegten Platten gebildet ist und Aufnahmen für die Permanentmagneten aufweist. Zur Verbesserung des Magnetflusses schlägt die US 2016/0172916 A1 vor, große Ausnehmungen innen im Rotorkörper vorzusehen.

Die EP 4 007 125 A1 offenbart einen Motor für ein Haushaltsgerät mit einem Rotor und einem Stator. Der Rotor hat einen Rotorkern der aus übereinandergelegten Platten gebildet ist. Der Rotorkern umfasst mehrere Sektorabschnitte, wobei zwischen je zwei Sektorabschnitten ein Aufnahmeschlitz mit einem Magneten gebildet ist. Zur Verbesserung der Leistung und für eine geringere Geräuschemission schlägt die EP 4 007 125 A1 ein bestimmtes Verhältnis bezüglich der Anzahl an Sektorabschnitten und Statoreinheiten vor.

Die US 2011/0290581 A1 offenbart einen Elektromotor (für einen Lenkantrieb. Bei der in Fig. 3 dargestellten Ausführungsform sind Permanentmagnete speichenartig angeordnet. Die zwischen den Permanentmagneten angeordneten Abschnitte weichen von einem Außenradius ab und beschreiben eine Sinusform.

Die US 5,829,120 A zeigt einen aus Rotorblechen aufgebauten Rotor mit Sektorabschnitten. Einige Rotorbleche können anders ausgebildet sein, um innen, außen, oder sowohl innen als auch außen Verbindungsabschnitte zu bilden.

Die EP 1 557 928 A1 betrifft einen Rotor mit einer Rotorabdeckung mit Luftleitelementen, wobei mittels der Rotorabdeckung auch die Permanentmagnete fixiert werden können.

Die US 2019/0058366 A1 zeigt einen Rotor, bei dem ein Halteteil aus einem Ring mit davon abstehenden Schenkeln zur Befestigung der Magneten verwendet wird.

Der vorliegenden Erfindung liegt die Aufgabe zugrunde, einen Elektromotor, eine Küchenmaschine mit einem Elektromotor und ein Herstellungsverfahren für einen Elektromotor anzugeben, wobei der Elektromotor eine effiziente Laufweise, geringe Geräuschemission und/oder hohe Leistungsdichte aufweist und/oder wobei der magnetische Fluss bzw. die magnetischen Eigenschaften des Rotors verbessert werden und/oder wobei die Permanentmagnete vor Entmagnetisierung geschützt werden.

Die der Erfindung zugrundeliegende Aufgabe wird durch einen Elektromotor gemäß Anspruch 1, eine Küchenmaschine gemäß Anspruch 12 oder ein Verfahren gemäß Anspruch 13 gelöst. Vorteilhafte Weiterbildungen sind Gegenstand der Unteransprüche.

Der vorschlagsgemäße Elektromotor weist einen (feststehenden) Stator und einen relativ zum Stator um eine Rotationsachse drehbaren Rotor auf.

Der Rotor weist einen Rotorkörper/Rotorkern auf, der durch übereinander gestapelte Rotorbleche bzw. Elektrobleche gebildet ist. Bei dem Rotorkern handelt es sich also um ein Blechpaket bzw. Rotorpaket.

Der Rotor weist eine Vielzahl von Permanentmagneten auf, die im Rotorkern vorgesehen bzw. eingebettet sind. Hierzu weist der Rotorkern entsprechende Magnetaufnahmen auf bzw. sind entsprechende Magnetaufnahmen im Rotorkern gebildet, wobei die Magnetaufnahmen radial nach außen jeweils durch einen (radialen) Anschlag begrenzt sind. Erfindungsgemäß sind hierzu Stege durch einzelne Rotorbleche gebildet, die anders als die übrigen Rotorbleche ausgebildet sind, wobei die Stege jeweils radiale Anlageflächen für die Permanentmagnete bilden.

Die räumlichen Zuordnungen, Anordnungen und/oder Ausrichtungen, insbesondere die im Rahmen der vorliegenden Erfindung verwendeten Begriffe "radial", "axial" und/oder "in Umfangsrichtung", beziehen sich - sofern nicht anders angegeben - insbesondere auf die Rotationsachse des Rotors bzw. eine Rotorwelle des Rotors.

Begriffe wie "oben", "unten" und dergleichen beziehen sich vorzugsweise auf die Erstreckung der Rotationsachse. Insbesondere bezeichnet "Oberseite" eine axiale Stirnseite des betreffenden Bauteils, insbesondere des Elektromotors, Rotors und/oder Rotorkerns, und "Unterseite" bezeichnet die andere bzw. gegenüberliegende axiale Stirnseite des betreffenden Bauteils, insbesondere des Elektromotors, Rotors und/oder Rotorkerns.

Die Begriffe werden hierbei gemäß der bevorzugten Ausrichtung des Elektromotors bzw. Rotors während der Montage der Permanentmagnete verwendet. Hierbei ist jedoch zu berücksichtigen, dass die Montage und/oder der Einbau des Elektromotors in eine Küchenmaschine oder eine andere Vorrichtung auch in einer anderen Ausrichtung erfolgen kann.

Der Rotorkern weist mehrere Sektorabschnitte auf bzw. ist in mehrere Sektorabschnitte unterteilt, wobei jeweils zwischen zwei benachbarten Sektorabschnitten eine Magnetaufnahme gebildet bzw. ein Permanentmagnet angeordnet ist. Insbesondere sind zwei benachbarte Sektorabschnitte voneinander beabstandet und dazwischen die Magnetaufnahme gebildet. In Umfangsrichtung sind also die Sektorabschnitte und die Magnetaufnahmen bzw. Permanentmagneten vorzugsweise alternierend angeordnet.

Jeder Sektorabschnitt weist zwei Innenseiten und eine Außenseite auf. Die Innenseiten sind hierbei jeweils einem benachbarten Permanentmagneten zugewandt und/oder begrenzen die Magnetaufnahme seitlich bzw. in Umfangsrichtung. Insbesondere ist eine Magnetaufnahme zwischen zwei sich gegenüberliegenden Innenseiten von zwei benachbarten Sektorabschnitten gebildet bzw. begrenzt.

Die Außenseite erstreckt sich zwischen den zwei benachbarten Permanentmagneten bzw. Magnetaufnahmen bzw. zwischen den zwei Innenseiten des Sektorabschnitts, insbesondere dem jeweils radial äußeren Ende der Permanentmagnete, Magnetaufnahmen und/oder Innenseiten, also jeweils dem von der Rotationsachse abgewandten Ende.

Die Außenseite bildet das von der Rotationsachse abgewandte radiale Ende des Sektorabschnitts. Insbesondere bilden die Außenseiten der Sektorabschnitte die Umfangsfläche bzw. Mantelfäche des Rotors bzw. Rotorkerns.

Gemäß einem ersten Aspekt der vorliegenden Erfindung sind die Außenseiten mit einer sich, insbesondere kontinuierlich, ändernden Krümmung bzw. einem sich, insbesondere kontinuierlich, ändernden Krümmungsradius gekrümmt. Insbesondere ist die Krümmung in der Mitte der Außenseite am geringsten und vergrößert sich jeweils in Richtung zu den benachbarten Permanentmagneten bzw. Magnetaufnahmen bzw. zu den jeweiligen Innenseiten. Äquivalent hierzu ist der Krümmungsradius in der Mitte der Außenseite am größten und verringert sich jeweils in Richtung zu den benachbarten Permanentmagneten bzw. Magnetaufnahmen bzw. zu den jeweiligen Innenseiten.

Die vorschlagsgemäße Krümmung der Außenseite mit sich änderndem bzw. von der Mitte abnehmendem Krümmungsradius sorgt für einen verbesserten Magnetfluss, insbesondere können Oberwellen der magnetischen Flussdichte im Luftspalt des Elektromotors minimiert werden. Hierdurch kann ein effizienter und/oder geräuscharmer Elektromotor und/oder eine hohe Leistungsdichte realisiert werden.

Ganz besonders bevorzugt lässt sich die Krümmung der Außenseite durch eine inverse Kosinusfunktion beschreiben. Hierdurch kann in besonders einfacher und/oder effizienter Weise eine vorschlagsgemäß gekrümmte Außenseite realisiert werden. Die gemäß inverser Kosinusfunktion gekrümmte Außenseite sorgt für einen besonders vorteilhaften Magnetfluss und damit einen effizienten, leistungsstarken und/oder geräuscharmen Elektromotor.

Der Rotorkern bzw. Sektorabschnitt weist vorzugsweise Fortsätze auf, wobei sich je ein Fortsatz von je einer Innenseite quer zur Innenseite erstreckt. Die Außenseite ist vorzugsweise teilweise durch die

Fortsätze gebildet. Der Sektorabschnitt mit zwei Fortsätzen ist vorzugsweise in einer Draufsicht oder einem Querschnitt (orthogonal zur Rotationsachse) im Wesentlichen ankerförmig.

In vorteilhafter Weise werden durch die Fortsätze die Permanentmagnete besser vor Entmagnetisierung geschützt und/oder eine geringere Geräuschentwicklung des Elektromotors erzielt, insbesondere bei mittleren Drehzahlen.

Die Fortsätze sind vorzugsweise ebenfalls mit der vorschlagsgemäßen Krümmung ausgebildet.

Gemäß einem weiteren Aspekt der vorliegenden Erfindung, der auch unabhängig realisiert sein kann, weisen die Sektorabschnitte konkave Aussparungen auf, die jeweils zwischen einer der Innenseiten und einem sich davon quer erstreckenden Fortsatz gebildet sind. Insbesondere ist die Aussparung also dort gebildet, wo sonst zwischen der Innenseite und dem Fortsatz eine (eckige bzw. scharfe) Kante wäre. "Aussparung" bedeutet hierbei vorzugsweise, dass der Sektorabschnitt weniger Material aufweist als ein Sektorabschnitt, bei dem zwischen Innenseite und Fortsatz eine (scharfe) Kante bzw. Ecke bzw. ein insbesondere rechter Winkel gebildet ist.

Der Abstand zwischen zwei gegenüberliegenden Aussparungen benachbarter Sektorabschnitte ist vorzugsweise größer als der Abstand zwischen den sich an die Aussparungen anschließenden Innenseiten. Mit anderen Worten ist die Magnetaufnahme im Bereich der Aussparungen vorzugsweise breiter als im Bereich der Innenseiten.

In vorteilhafter Weise schützen die Aussparungen die Permanentmagnete vor Entmagnetisierung und/oder verbessern die Führung des magnetischen Flusses. Dies ist einem effizienten, leistungsstarken und/oder geräuscharmen Elektromotor zuträglich. Ferner sind die Aussparungen auch vorteilhaft beim Stanzen der Rotorbleche, da durch die Abrundung weniger starke mechanische und/oder thermische Belastungen auftreten.

Generell hat der vorschlagsgemäße Elektromotor eine geringe Geräuschemission, hohe Leistungsdichte und/oder große Drehzahlspreizung.

Unter einen großen Drehzahlspreizung ist zu verstehen, dass der Elektromotor über einen großen Drehzahlbereich betrieben werden kann, insbesondere sowohl bei niedrigen als auch bei hohen Drehzahlen. Besonders bevorzugt sind Drehzahlen von 10 U/min bis 10.000 U/min mit dem vorschlagsgemäßen Elektromotor realisierbar.

Darüber hinaus kann vorzugsweise das volle Drehmoment im Stillstand abgerufen werden und/oder der Elektromotor definiert angesteuert werden, insbesondere in definierten kleinen Winkelbereichen gedreht werden.

Ein weiterer, auch unabhängig realisierbarer Aspekt der vorliegenden Erfindung betrifft ein Verfahren zur Herstellung eines Elektromotors bzw. eines Rotors für einen Elektromotor, wobei der Rotor einen Rotorkern mit Magnetaufnahmen aufweist.

Bei dem vorschlagsgemäßen Verfahren werden zunächst bereits magnetisierte oder noch unmagnetisierte Permanentmagnete/Bauteile in die Magnetaufnahmen eingesetzt und am Rotorkern befestigt, insbesondere geklemmt und/oder geklebt. Anschließend wird der Rotor ausgewuchtet, wobei das Auswuchten durch das Setzen von Wuchtbohrungen an einer oder beiden axialen Stirnseiten des Rotorkerns, also seiner Ober- und/oder Unterseite, erfolgt.

Durch das vorschlagsgemäße Verfahren kann in vorteilhafter und einfacher Weise ein effizient- bzw. rund-laufender und/oder geräuscharmer Elektromotor hergestellt werden.

Vorzugsweise werden die Permanentmagnete erst nach dem Auswuchten des Rotors magnetisiert. In diesem Sinne handelt es sich bei den während des Verfahrens eingesetzten und befestigten Magneten also vorzugsweise um noch unmagnetisierte Permanentmagnete bzw. um noch unmagnetisierte, permanent magnetisierbare Bauteile.

Alternativ können aber auch schon bereits magnetisierte Permanentmagnete bzw. bereits magnetisierte, permanent magnetisierbare Bauteile eingesetzt und befestigt werden oder diese können nach dem Einsetzen/Befestigen, aber vor dem Auswuchten magnetisiert sein/werden.

Besonders bevorzugt wird mittels des vorschlagsgemäßen Verfahren ein vorschlagsgemäßer Elektromotor hergestellt und/oder ausgewuchtet. Der vorschlagsgemäße Elektromotor weist entsprechend vorzugsweise eine oder mehrere Wuchtbohrungen an einer oder beiden axialen Stirnseiten auf.

Vorzugsweise werden die Wuchtbohrungen durch Ausnehmungen eines Bauteils des Elektromotors oder Rotors hindurch gesetzt bzw. weist ein Bauteil des Elektromotors oder Rotors entsprechende Ausnehmungen auf. Bei dem Bauteil kann es sich beispielsweise um eine Montageeinrichtung für den Rotor und/oder einen Lüfter bzw. ein Lüfterrad und/oder ein Gehäuse oder Gehäuseteil handeln. Auch ist es möglich, dass mehrere Bauteile entsprechende Ausnehmungen aufweisen, beispielsweise ein am Rotor befestigter Lüfter und ein Außengehäuse des Elektromotors. Hierdurch kann der Elektromotor im bereits vollständig oder zumindest größtenteils zusammengesetzten Zustand ausgewuchtet werden. Insbesondere können durch das Bauteil hervorgerufene Unwuchten berücksichtigt werden.

Ein weiterer, auch unabhängig realisierbarer Aspekt der vorliegenden Erfindung betrifft eine Küchenmaschine mit einem vorschlagsgemäßen Elektromotor und/oder einem mit dem vorschlagsgemäßen Verfahren hergestellten Elektromotor.

Die vorschlagsgemäße Küchenmaschine wird von dem Elektromotor angetrieben, insbesondere zum Zerkleinern und/oder Rühren bzw. Mischen von Lebensmitteln. Besonders bevorzugt weist die Küchenmaschine einen Rührer, ein Schneide o. dgl. auf, der/die von dem Elektromotor in Rotation versetzt werden kann.

Durch die Verwendung des vorschlagsgemäßen Elektromotors in einer Küchenmaschine können entsprechende Vorteile erzielt werden. Insbesondere ist die geringe Geräuschemission, effiziente Laufweise und/oder verbesserte Ansteuerbarkeit vorteilhaft.

Zudem ist der große Drehzahlbereich, in dem der Elektromotor arbeiten kann, besonders vorteilhaft bei der Verwendung in einer Küchenmaschine. Je nach eingestellter Drehzahl des Elektromotors kann sowohl ein Rühren von Speisen als auch ein Zerkleinern von Speisen erzielt werden. Der vorschlagsgemäße Elektromotor erlaubt hierbei vorzugsweise auch ein langsames Rühren, was eine größere Rezeptvielfalt erlaubt. Zudem wird vorzugsweise auch ein definiertes Zerkleinern von Zutaten ermöglicht, was einer besseren Zubereitung und/oder besseren Optik der Speisen zuträglich ist.

Ferner kann der vorschlagsgemäße Elektromotor aufgrund seiner kompakten, flachen bzw. einfachen Bauweise besonders platzsparend in der Küchenmaschine angeordnet werden.

Grundsätzlich kann der Elektromotor jedoch auch in anderen Vorrichtungen verwendet werden, beispielsweise einem Staubsauger oder Saugroboter.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine perspektivische Ansicht eines vorschlagsgemäßen Elektromotors mit einem Stator und einem vorschlagsgemäßen Rotor;
- Fig. 2: eine Explosionsdarstellung des Stators gemäß Fig. 1;
- Fig. 3: eine perspektivische Ansicht des Rotors gemäß Fig. 1;
- Fig. 4: eine Explosionsdarstellung des Rotors gemäß Fig. 3;
- Fig. 5: eine Draufsicht des Rotors gemäß Fig. 3 mit einem vergrößerten Ausschnitt im Bereich eines Anschlags;
- Fig. 6: einen Schnitt des Rotors gemäß Fig. 3 entlang seiner Rotationsachse im Bereich eines Permanentmagnets des Rotors;
- Fig. 7: einen zu Fig. 6 korrespondierenden Schnitt des Rotors beim Einsetzen eines Permanentmagneten während der Montage;
- Fig. 8: einen zu Fig. 6 korrespondierenden Schnitt des vorschlagsgemäßen Rotors gemäß einer zweiten Ausführungsform;
- Fig. 9: einen Schnitt des vorschlagsgemäßen Rotors gemäß einer dritten Ausführungsform entlang seiner Rotationsachse im Bereich eines Abschnitts des Rotorkerns;
- Fig. 10: eine Explosionsdarstellung eines Rotors gemäß einer vierten Ausführungsform;
- Fig. 11: eine Draufsicht der Rotors gemäß der vierten Ausführungsform mit einem vergrößerten Ausschnitt im Bereich eines Anschlags; und
- Fig. 12: eine Seitenansicht einer vorschlagsgemäßen Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

Zur besseren Übersichtlichkeit sind bei gleichen Bauteilen und Komponenten innerhalb einer Figur nicht alle Bauteile/Komponenten mit einem Bezugszeichen versehen.

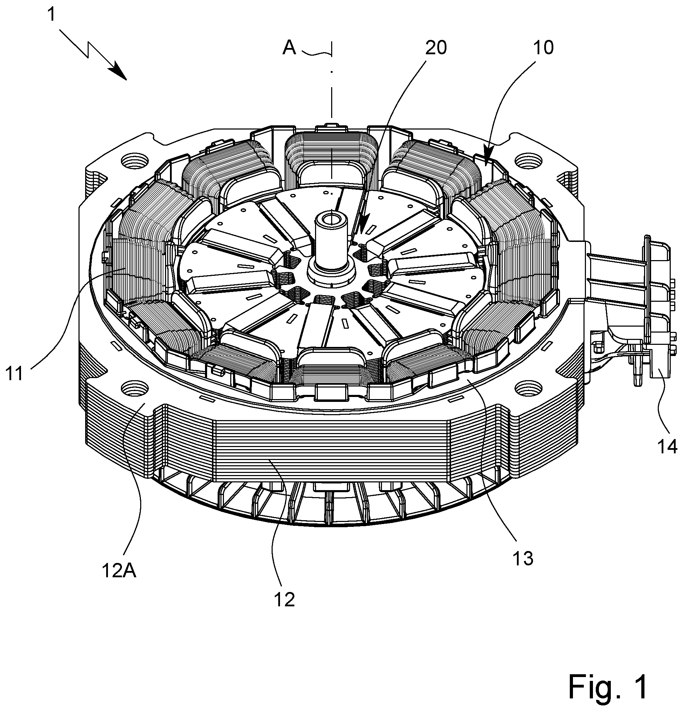

Fig. 1 zeigt einen vorschlagsgemäßen Elektromotor 1 in einer schematischen, perspektivischen Darstellung.

Bei der dargestellten Ausführungsform ist der Elektromotor 1 als bürstenloser Gleichstrommotor ausgebildet. Es sind jedoch grundsätzlich auch andere Lösungen möglich.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, und/oder ist die maximale Drehzahl größer als 2000, 5000 oder 8000 U/min, insbesondere größer oder gleich 10.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Wie bereits eingangs erwähnt, beziehen sich Begriffe wie "axial", "radial" und dergleichen vorzugsweise auf die Rotationsachse A.

Optional kann der Elektromotor 1 ein Gehäuse aufweisen bzw. können Stator 10 und/oder Rotor 20 in einem Gehäuse angeordnet sein (nicht dargestellt).

Beim Darstellungsbeispiel ist der Elektromotor 1 als Innenläufer-Motor ausgebildet bzw. ist der Rotor 20 zumindest teilweise innerhalb des Stators 10 angeordnet. Prinzipiell ist es jedoch auch möglich, den vorschlagsgemäßen Elektromotor 1 als Außenläufer-Motor auszubilden (nicht dargestellt) bzw. das vorschlagsgemäße Montageverfahren bei einem Außenläufer-Motor vorzusehen.

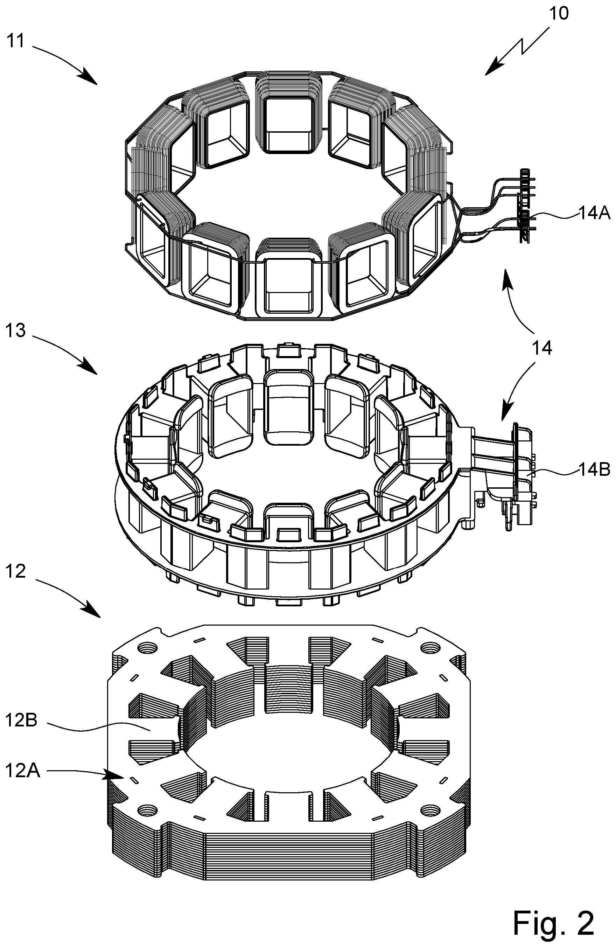

Fig. 2 zeigt den Stator/Ständer 10 des Elektromotors 1 in einer schematischen Explosionsdarstellung.

Der Stator 10 weist mehrere, hier zwölf, Wicklungen/Spulen 11, einen Statorkern 12, einen Spulenträger 13 und/oder eine Anschlusseinrichtung 14 auf.

Der Statorkern 12 umfasst vorzugsweise mehrere gestapelte Elektrobleche bzw. Statorbleche 12A, die mehrere, hier zwölf, Spulenabschnitte 12B bilden, wobei jede Wicklung/Spule 11 um einen Spulenabschnitt 12B gewickelt ist und/oder sich jeweils ein Spulenabschnitt 12B durch eine Spule 11 hindurch erstreckt.

Optional kann der Spulenträger 13 vorgesehen sein, der die Spulen 11 trägt, wie in Fig. 1 dargestellt. Es ist jedoch auch möglich, die Spulen 11 direkt um die Spulenabschnitte 12B zu wickeln.

Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 mit Strom versorgt werden. Vorzugsweise weist die Anschlusseinrichtung 14 einen oder mehrere elektrische Anschlüsse 14A und/oder einen Anschlussträger 14B auf, der bevorzugt einstückig mit dem Spulenträger 13 bzw. einem Teil des Spulenträgers 13 ausgebildet ist.

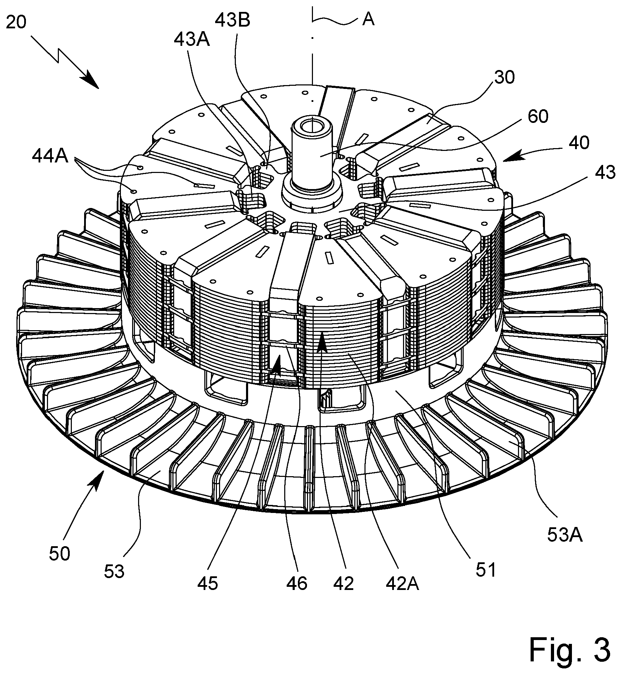

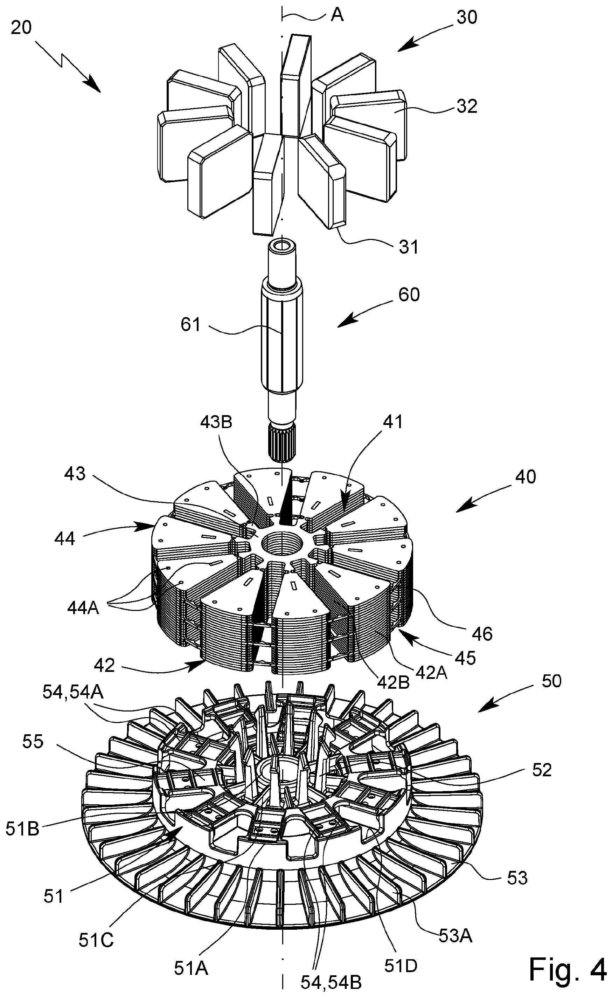

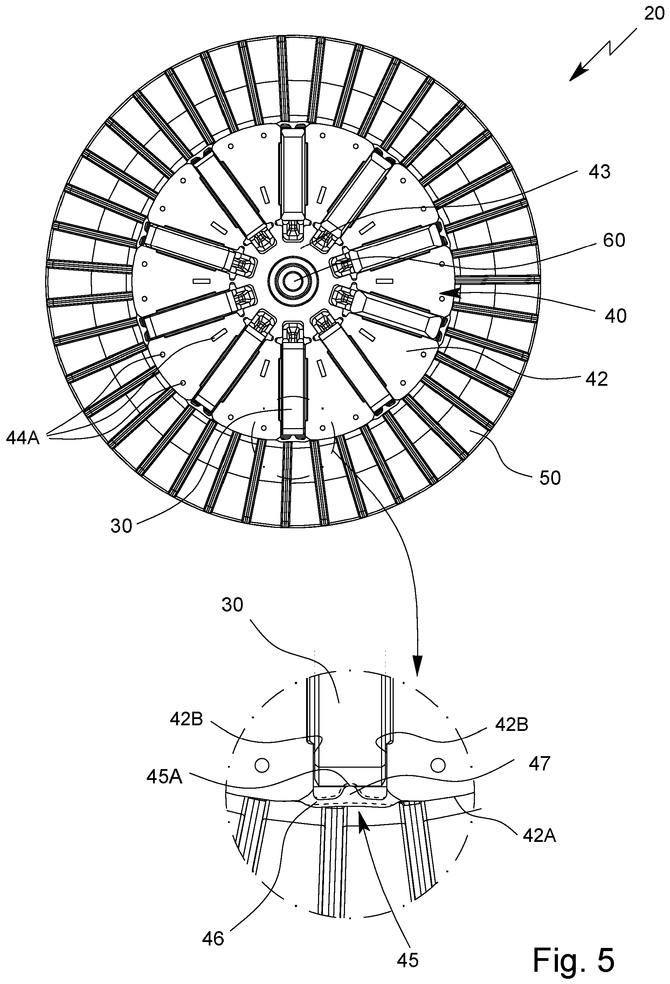

Fig. 3 zeigt den vorschlagsgemäßen Rotor/Läufer 20 in einer schematischen, perspektivischen Ansicht, die zu Fig. 1 korrespondiert. Fig. 4 zeigt den Rotor 20 in einer schematischen Explosionsdarstellung. Fig. 5 zeigt den Rotor 20 in einer schematischen Draufsicht.

Der Rotor 20 weist mehrere, hier zehn, Permanentmagnete 30, einen Rotorkern 40, eine Montageeinrichtung 50 und/oder eine Welle 60 auf.

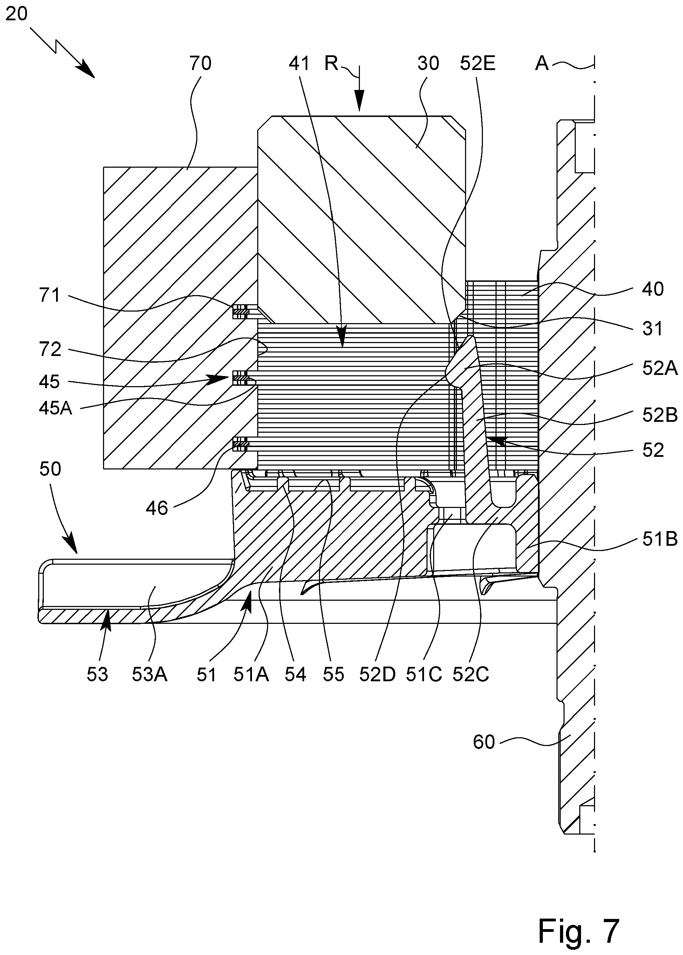

Die Permanentmagnete 30 sind vorzugsweise zumindest im Wesentlichen quaderförmig ausgebildet. An ihren Kanten können die Permanentmagneten 30 abgerundet sein und/oder Einführschrägen 31 aufweisen, worauf noch später im Zusammenhang mit Fig. 7 näher eingegangen wird.

Vorzugsweise sind die Permanentmagnete 30 flach ausgebildet bzw. weisen jeweils zwei gegenüberliegende Flachseiten 32 auf.

Die Flachenseiten 32 sind bevorzugt zumindest im Wesentlichen quadratisch ausgebildet, können jedoch auch, je nach Höhe des Rotorkerns 40, rechteckig sein.

Die Flachseiten 32 haben vorzugsweise jeweils einen Flächeninhalt von mehr als 4 cm², insbesondere von mehr als 4,5 cm² und/oder von weniger als 5 cm².

Die Längserstreckung der Permanentmagnete 30 bzw. die Seitenlängen der Flachseiten 32 beträgt/betragen vorzugweise jeweils mindestens das Doppelte oder Dreifache, besonders bevorzugt etwa das Vierfache, von der jeweiligen Dicke/Breite der Permanentmagnete 30.

Die Seitenlängen der Flachseiten 32 sind vorzugweise länger als 15 mm, insbesondere länger als 20 mm, und/oder kürzer als 30 mm, insbesondere kürzer als 25 mm. Besonders bevorzugt betragen beide Seitenlängen der Flachseiten 32 etwa 22 mm.

Die Dicke/Breite der Permanentmagnete 30 beträgt vorzugsweise jeweils mehr als 3 mm und/oder weniger als 7 mm, besonders bevorzugt zwischen 4 und 6,5 mm, insbesondere etwa 5,6 mm.

Vorzugsweise sind die Permanentmagnete 30 in Richtung ihrer Dicke/Breite bzw. in die Richtung orthogonal zu den Flachseiten 32 polarisiert und/oder bilden die zwei Flachseiten 32 eines Permanentmagneten 30 unterschiedliche Pole. Man spricht hierbei von diametraler Magnetisierung.

Bei den Permanentmagneten 30 handelt es sich bevorzugt um Ferritmagnete und/oder die Permanentmagnete 30 sind vorzugsweise aus Hartferrit hergestellt.

An dieser Stelle sei angemerkt, dass die Permanentmagnete 30 bevorzugt erst nach dem Einsetzen in den Rotorkern 40 magnetisiert werden. In diesem Sinne ist der Begriff "Permanentmagnete" vorzugsweise breit zu verstehen und umfasst auch (zumindest vor und unmittelbar nach dem Einsetzen in den Rotorkern 40) Bauteile, die noch nicht magnetisch, aber zur (permanenten) Magnetisierung ausgebildet sind.

Ein "Permanentmagnet" ist also vorzugsweise generell ein permanent magnetisierbares Bauteil, das magnetisiert oder (noch) unmagnetisiert sein kann. In diesem Sinne kann in der vorhergehenden und der nachfolgenden Beschreibung der Begriff "Permanentmagnet" auch durch den Begriff "permanent magnetisierbares Bauteil" ausgetauscht werden bzw. sind diese Begriffe synonym zu verstehen.

Im Folgenden wird nur noch der Begriff "Permanentmagnet" verwendet und ist vorzugsweise als ein Bauteil zu verstehen, das magnetisiert oder unmagnetisiert ist, sofern nicht explizit anders erwähnt, aber in jedem Fall magnetisierbar ist. Es sind also vorzugsweise sowohl (bereits) magnetisierte Permanentmagnete 30 als auch (noch) unmagnetisierte Permanentmagnete 30 umfasst, sofern nicht explizit anders beschrieben.

Die Permanentmagneten 30 haben vorzugsweise (jeweils) eine Remanenzflussdichte größer als 400 mT, insbesondere größer als 410 mT, und/oder kleiner als 450 mT, insbesondere kleiner als 420 mT. Besonders bevorzugt liegt die Remanenzflussdichte zwischen 412.5 mT und 427.5 mT.

Die Permanentmagneten 30 haben vorzugsweise (jeweils) eine Koerzitivfeldstärke der magnetischen Polarisation von mindestens 200 oder 250 kA/m, besonders bevorzugt von mindestens 300 kA/m oder mehr.

Die Permanentmagneten 30 haben vorzugsweise (jeweils) ein (maximales) Energieprodukt von mindestens 20, 25 oder 30 kJ/m³, besonders bevorzugt von mindestens 32 kJ/m³ oder mehr.

Die Permanentmagneten 30 haben vorzugsweise (jeweils) eine Oberflächenspannung von mindestens 20, 25 oder 30 mNm, besonders bevorzugt von mindestens 32 mNm oder mehr.

Die Permanentmagnete 30 sind im Rotorkern 40 angeordnet bzw. eingebettet. Der Rotorkern 40 weist hierzu entsprechende Magnetaufnahmen 41 auf.

Die Permanentmagnete 30 sind vorzugsweise so im Rotor 20 bzw. Rotorkern 40 angeordnet, dass sie in Umfangsrichtung - bezogen auf die Welle 60 bzw. Rotationsachse A - polarisiert sind und/oder dass die Flächennormalen ihrer Flachseiten 32 in Umfangsrichtung zeigen.

Die Permanentmagnete 30 bzw. Magnetaufnahmen 41 sind vorzugweise sternförmig im Rotor 20 bzw. Rotorkern 40 und/oder um die Welle 60 bzw. Rotationsachse A herum angeordnet und/oder erstrecken sich bzw. haben eine Haupt-/Längserstreckung - bezogen auf die Welle 60 bzw. Rotationsachse A - in radialer Richtung.

Die Permanentmagnete 30 sind vorzugsweise derart angeordnet, dass die einander zugewandten Pole bzw. Flachseiten 32 zweier benachbarter Permanentmagnete 30 die gleiche Polarität aufweisen, so dass der zwischen den Polen bzw. Flachseiten 32 angeordnete Teil bzw. Sektorabschnitt 42 des Rotorkerns 40 entsprechend polarisiert ist bzw. einen entsprechenden Pol des Rotorkerns 40 bildet. Mit anderen Worten sind zwei benachbarte Permanentmagnete 30 vorzugsweise in entgegengesetzte Richtungen polarisiert.

Grundsätzlich können die Permanentmagnete 30 jedoch auch anders geformt, polarisiert und/oder angeordnet sein, beispielsweise mit einer Längserstreckung in Umfangsrichtung oder senkrecht/tangential zur radialen Richtung. Die Magnetaufnahmen 41 sind dann entsprechend geformt/angeordnet.

Der Rotorkern 40 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 40. Ein ringförmiger Rotorkern 40 ist insbesondere auch bei einem Außenläufer-Motor denkbar.

Der Rotorkern 40 ist auf der Welle 60 befestigt, insbesondere kraft-, form- und/oder stoffschlüssig mit der Welle 60 verbunden.

Zur Befestigung des Rotorkerns 40 kann die Welle 60 Riffeln bzw. Hervorstehungen 61 aufweisen. Wenn der Rotorkern 40 auf die Welle 60 aufgezogen wird, graben sich die Hervorstehungen 61 in den Rotorkern 40 ein und befestigen diesen so auf der Welle 60. Hier sind jedoch auch andere Lösungen möglich.

Der Rotorkern 40 umfasst vorzugsweise mehrere, hier zehn, Sektorsegmente bzw. Sektorabschnitte 42, wobei zwischen zwei benachbarten Sektorabschnitten 42 jeweils eine Magnetaufnahme 41 gebildet bzw. ein Permanentmagnet 30 aufgenommen ist. Insbesondere sind die Magnetaufnahmen 41 seitlich bzw. in Umfangsrichtung jeweils von zwei Sektorabschnitten 42 begrenzt.

Vorzugsweise weist der Rotorkern 40 einen inneren Abschnitt 43 zur Aufnahme der Welle 60 auf, der ringförmig bzw. hohlzylindrisch ausgebildet ist. Die Sektorabschnitte 42 erstrecken sich vorzugsweise ausgehend vom inneren Abschnitt 43 in radialer Richtung.

Der Rotorkern 40 weist - auch bei eingesetzten Permanentmagneten 30 - vorzugsweise eine oder mehrere Öffnungen 43A zwischen den Permanentmagneten 30 und der Welle 60 bzw. Rotationsachse A, insbesondere zwischen den Permanentmagneten 30 und dem inneren Abschnitt 43, auf.

Die Öffnungen 43A erstrecken sich vorzugsweise in axialer Richtung durch den Rotorkern 40 hindurch bzw. von der Oberseite bzw. einer (ersten) axialen Stirnseite des Rotorkerns 40 bis zur Unterseite bzw. der anderen (zweiten) axialen Stirnseite des Rotorkerns 40.

Vorzugsweise sind die Öffnungen 43A ringartig um den inneren Abschnitt 43 bzw. die Welle 60 bzw. Rotationsachse A angeordnet.

Jede Öffnung 43A ist vorzugsweise in radialer Richtung durch einen jeweiligen Permanentmagneten 30 begrenzt. Vorzugsweise schließt sich die jeweilige Öffnung 43A (radial innen) an die jeweilige Magnetaufnahme 41 an und/oder kann als Verlängerung der jeweiligen Magnetaufnahme 41 angesehen werden.

Die Öffnungen 43A sind im Querschnitt (orthogonal zur Welle 60 bzw. der Rotationsachse A) vorzugsweise zumindest im Wesentlichen rechteckig.

Mithilfe der Öffnungen 43A kann die Leitfähigkeit der Magneten 30 im Rotorkern 40 und/oder der magnetische Fluss verbessert/konzentriert und/oder der magnetische Streufluss vermindert werden.

Die Sektorabschnitte 42 sind vorzugweise sternförmig am inneren Abschnitt 43 und/oder um die Welle 60 bzw. Rotationsachse A herum angeordnet.

Vorzugsweise weist der Rotorkern 40 Verbindungsabschnitte 43B auf, die jeweils die Sektorabschnitte 42 mit dem inneren Abschnitt 43 verbinden und/oder zwischen den Sektorabschnitten 42 und dem inneren Abschnitt 43 angeordnet sind.

Die Verbindungsabschnitte 43B erstrecken sich vorzugsweise sternförmig und/oder in radialer Richtung und/oder vom inneren Abschnitt 43 zum jeweiligen Sektorabschnitt 42.

Die Sektorabschnitte 42, der innere Abschnitt 43 und/oder die Verbindungsabschnitte 43B erstrecken sich in axialer Richtung vorzugsweise über die gesamte Höhe/Erstreckung des Rotorkerns 40.

Die Verbindungsabschnitte 43B sind vorzugsweise stegförmig ausgebildet und/oder bilden Stege zwischen dem jeweiligen Sektorabschnitt 42 und inneren Abschnitt 43. Ein Verbindungsabschnitt 43B hat (an seiner dünnsten Stelle) vorzugsweise eine Breite, also eine Erstreckung in Umfangsrichtung bzw. eine Erstreckung quer zu seiner radialen Längserstreckung, von mindestens 0,3 mm, insbesondere 0,4 mm, und/oder von höchstens 0,7 mm, insbesondere höchstens 0,6 mm. Besonders bevorzugt hat jeder Verbindungsabschnitt 43B (an seiner dünnsten Stelle) eine Breite von etwa 0,5 mm.

Die dünnste Stelle des Verbindungsabschnitts 43B ist vorzugsweise in dem Bereich des Verbindungsabschnitts 43B, der unmittelbar an den Sektorabschnitt 42 angrenzt bzw. wo der Verbindungsabschnitt 43B in den Sektorabschnitt 42 übergeht.

Die Öffnungen 43A sind vorzugsweise jeweils zwischen den Verbindungsabschnitten 43B gebildet.

Vorzugsweise sind die Öffnungen 43A durch den inneren Abschnitt 43, je zwei Verbindungsabschnitte 43B und je einen Permanentmagneten 30 begrenzt. Insbesondere bilden der innere Abschnitt 43, je ein Verbindungsabschnitt 43B und je ein Permanentmagnet 30 jeweils eine Seite der zumindest im Wesentlichen rechteckigen Öffnung 43A.

Die Sektorabschnitte 42 sind vorzugsweise jeweils keilförmig bzw. tortenstückförmig ausgebildet und/oder haben vorzugsweise jeweils einen Querschnitt (orthogonal zur Rotationsachse A) in Form eines Kreissektors und/oder zumindest im Wesentlichen eines Dreiecks.

Die Sektorabschnitte 42 sind vorzugsweise zylinder-bzw. prismenförmig, insbesondere mit zumindest im Wesentlichen kreissegmentförmiger Grundfläche bzw. kreissegmentförmigem Querschnitt.

Vorzugsweise hat jeder Sektorabschnitt 42 eine Außenseite 42A und zwei Innenseiten 42B.

Der Sektorabschnitt 42 bzw. die Außenseite 42A ist vorzugsweise spiegelsymmetrisch zu einer Ebene, die sich in axialer und radialer Richtung erstreckt und/oder in der die Rotationsachse A liegt und/oder die entlang des Verbindungsabschnitts 43B verläuft. Die Innenseiten 42B sind vorzugsweise spiegelsymmetrisch zueinander in Bezug auf diese Ebene.

Die Innenseiten 42B sind jeweils einer Magnetaufnahme 41 bzw. einem Permanentmagneten 30 zugewandt und/oder begrenzen jeweils eine Magnetaufnahme 41 seitlich bzw. in Umfangsrichtung. Eine/jede Magnetaufnahme 41 ist somit vorzugsweise jeweils von zwei sich gegenüberliegenden Innenseiten 42B benachbarter Sektorabschnitte 42 begrenzt bzw. definiert, insbesondere seitlich bzw. in Umfangsrichtung.

Zwei sich gegenüberliegende Innenseiten 42B von zwei benachbarten Sektorabschnitten 42 verlaufen vorzugsweise zumindest im Wesentlichen parallel zueinander. Der Abstand dieser Innenseiten 42B bzw. die Breite der dazwischen gebildeten Magnetaufnahme 41 ist also vorzugsweise zumindest im Wesentlichen konstant.

Die Innenseiten 42B sind vorzugsweise zumindest im Wesentlichen planar bzw. eben bzw. nicht gekrümmt.

Unter der Breite des Sektorabschnitts 42 ist vorzugsweise der Abstand der beiden Innenseiten 42B des Sektorabschnitts 42 voneinander zu verstehen.

Vorzugsweise verringert sich die Breite des Sektorabschnitts 42 bzw. der Abstand der beiden Innenseiten 42B eines Sektorabschnitts 42 in Richtung zu der Rotationsachse A, der Welle 60, des inneren Abschnitts 43 und/oder des Verbindungsabschnitts 43B.

Vorzugsweise vergrößert sich die Breite des Sektorabschnitts 42 bzw. der Abstand der beiden Innenseiten 42B eines Sektorabschnitts 42 in Richtung zu der Außenseite 42A.

Die Breite eines Sektorabschnitts 42 bzw. der Abstand der beiden Innenseiten 42B eines Sektorabschnitts 42 nimmt in radialer Richtung nach außen vorzugsweise im Wesentlichen kontinuerlich bzw. linear zu.

Die beiden Innenseiten 42B erstrecken sich vorzugsweise vom Verbindungsabschnitt 43B zur Außenseite 42A, insbesondere jeweils zu einer Außenkante bzw. einer Magnetaufnahme 41 zugewandten Kante der Außenseite 42A.

Die Innenseiten 42B erstrecken sich vorzugsweise annähernd in radialer Richtung.

Die Ebenen, in denen die Innenseiten 42B eines Sektorabschnitts 42A liegen, schneiden sich vorzugsweise zwischen der Rotationsachse A bzw. Welle 60 und dem Sektorabschnitt 42 oder dem zugeordneten Verbindungsabschnitt 43A. Mit anderen Worten schneiden sich die Ebenen vor der Rotationsachse A bzw. Welle 60. Die Ebenen bzw. Innenseiten 42B verlaufen damit insbesondere nicht (exakt) in radialer Richtung.

Die Außenseite 42A eines Sektorabschnitts 42 erstreckt sich vorzugsweise zwischen den beiden Innenseiten 42B eines Sektorabschnitts 42 und/oder zwischen den beiden benachbarten Magnetaufnahmen 41 bzw. Permanentmagneten 30, insbesondere am radial äußeren Ende der Innenseiten 42B, Magnetaufnahmen 41 und/oder Permanentmagneten 30.

Die Außenseite 42A ist vorzugsweise von der Rotationsachse A, der Welle 60, dem inneren Abschnitt 43 und/oder dem Verbindungsabschnitt 43B abgewandt und/oder bildet die radial äußere Seite des Sektorabschnitts 42.

Insbesondere sind die Außenseiten 42A der Sektorabschnitte 42 radial außen bzw. am Außenumfang des Rotorkerns 40 angeordnet bzw. bilden die äußere Fläche oder Mantelfläche des Rotorkerns 40.

Vorzugsweise ist die Außenseite 42A gekrümmt bzw. weist eine Krümmung auf, insbesondere entlang ihrer Breite, also ihrer Erstreckung zwischen den Innenseiten 42B, Permanentmagneten 30 bzw. Magnetaufnahmen 41.

Die Außenseite 42A ist vorzugsweise einfach gekrümmt bzw. nur in einer Dimension gekrümmt. Insbesondere ist die Außenseite 42A entlang ihrer Höhe, also entlang ihrer Erstreckung in axialer Richtung, nicht gekrümmt. D.h. jede axiale verlaufende (gedachte) Linie auf der Außenseite ist gerade bzw. ungekrümmt, während hierzu quer, insbesondere orthogonal, verlaufende Linien gekrümmt sind.

Im Querschnitt, insbesondere orthogonal zur Rotationsachse A, ist die Außenkontur des Sektorabschnitts 42 vorzugsweise bogenförmig, insbesondere kreisbogenförmig.

Unter der Außenkontur ist vorzugweise eine Linie bzw. Kontur auf der Außenseite 42A zu verstehen, die orthogonal zu einer auf der Außenseite axial verlaufenden Linie ist und/oder die Linie bzw. Kontur der Außenseite 42A im Querschnitt orthogonal zur Rotationsachse A. Insbesondere verläuft die Außenkontur entlang der Breite der Außenseite 42A.

Unter eine Außenseite 42A mit kreisbogenförmiger Außenkontur fällt vorzugsweise auch eine Außenseite 42A, bei der deren äußere bzw. den Magnetaufnahmen 41 / Permanentmagneten 30 zugewandte Kanten abgerundet sind, die also im Bereich dieser Kanten von der Kreisbogen-Form abweichen kann.

Durch die Permanentmagneten 30 werden bzw. sind die Sektorabschnitte 42 magnetisiert bzw. polarisiert, insbesondere wobei die Sektorabschnitte 42 alternierend Nord- und Südpole bilden.

Vorzugsweise sind die Magnetaufnahmen 41 an die Form der Permanentmagnete 30 angepasst und/oder weisen entsprechende Abmessungen bzw. Dimensionen auf.

Bevorzugt sind die Magnetaufnahmen 41 geringfügig breiter als die Permanentmagnete 30, insbesondere um mehr als 0,1 mm und/oder weniger als 0,3 mm.

Bevorzugt ist die Seitenlänge der Permanentmagnete 30 bzw. im eingebauten Zustanden die axiale Erstreckung der Permanentmagnete 30 größer als die axiale Erstreckung der Magnetaufnahmen 41, insbesondere um mehr als 0,5 mm oder 1 mm und/oder weniger als 4 mm oder 3 mm, besonders bevorzugt um etwa 2 mm.

Die Permanentmagnete 30 ragen also bevorzugt axial aus dem Rotorkern 40 bzw. den Magnetaufnahmen 41 heraus, besonders bevorzugt nur an ein einer Seite des Rotorkerns 40, insbesondere der Oberseite bzw. einer Montageeinrichtung 50 bzw. einem Lüfter abgewandeten Seite, und/oder um die zuvor angegebenen Werte.

Beim Darstellungsbeispiel sind die Magnetaufnahmen 41 vorzugsweise schlitzförmig oder schachtförmig ausgebildet bzw. bilden Aufnahmeschlitze oder Aufnahmeschachte und/oder erstrecken sich in radialer Richtung.

Die Breite der Magnetaufnahmen 41 bzw. der Abstand von zwei benachbarten Sektorabschnitten 42 ist vorzugsweise zumindest im Wesentlichen konstant.

Die Permanentmagnete 30, Magnetaufnahmen 41 und/oder Sektorabschnitte 42 sind vorzugsweise gleichmäßig über einen Kreisumfang verteilt. Benachbarte Permanentmagneten 30 schließen also vorzugsweise einen Winkel von 360° geteilt durch die Anzahl der Permanentmagnete 30 ein. Entsprechendes gilt für die Magnetaufnahmen 41 bzw. Sektorabschnitte 42.

Der Rotorkern 40 umfasst mehrere gestapelte Elektrobleche bzw. Rotorbleche 44 oder ist daraus gebildet. Die Rotorbleche 44 sind entsprechend geformt bzw. gestanzt, um die Magnetaufnahmen 41 bzw. Sektorabschnitte 42 des Rotorkerns 40 zu realisieren.

Die Form eines einzelnen Rotorblechs 44 entspricht vorzugsweise der zuvor beschriebenen Form des Rotorkerns 40, mit dem Unterschied, dass das Rotorblech 44 nur eine geringe axialer Erstreckung aufweist bzw. flach, insbesondere annähernd zweidimensional, ist. Die vorherigen und folgenden Ausführungen zur Form des Rotorkerns 40 oder Teilen davon, beispielsweise der Sektorabschnitte 42, gelten also vorzugsweise auch für die Rotorbleche 44.

Vorzugsweise beträgt die Dicke bzw. axiale Erstreckung eines Rotorblechs 44 höchstens 1 mm, insbesondere höchstens 0,7 mm und/oder mindestens 0,2 mm, insbesondere mindestens 0,4 mm. Besonders bevorzugt beträgt die Dicke bzw. axiale Erstreckung eines Rotorblechs 44 etwa 0,5 mm.

Die Innenseiten und Außenseite eines Sektorabschnitts eines Rotorblechs 44 sind somit vorzugsweise annährend linienförmig. Es gelten jedoch vorzugsweise die gleichen Ausführungen wie zuvor, insbesondere bezüglich der Krümmung der Außenseite.

Die Rotorbleche 44 sind vorzugsweise jeweils einstückig ausgebildet, insbesondere als ein Stück aus einem Rohling ausgestanzt.

Die Rotorbleche 44 können Verbindungsbereiche bzw. Stanzbereiche 44A zur Verbindung der einzelnen Rotorbleche 44 aufweisen. Hierbei handelt es sich bevorzugt um Erhöhungen oder Vertiefungen im jeweiligen Rotorblech 44, die für einen definierten Zusammenhalt der Rotorbleche 44 sorgen. Beim Darstellungsbeispiel weist jedes Rotorblech 44 drei Stanzbereiche 44A pro Sektorabschnitt 42 auf. Die Stanzbereiche 44A sind vorzugsweise punktförmig und/oder linienförmig ausgebildet.

Die Rotorbleche 44 werden bzw. wurden vorzugsweise mit einer Kraft von mehr als 30 kN, 40 kN oder 50 kN, und/oder von weniger als 80 kN oder 70 kN, besonders bevorzugt mit einer Kraft von etwa 60 kN, zusammengedrückt bzw. verdichtet, um den Rotorkern 40 zu bilden.

Der Rotorkern 40 besteht aus oder umfasst vorzugsweise mindestens 30, insbesondere mindestens 35, und/oder vorzugsweise höchstens 50, insbesondere höchstens 45 Rotorbleche 44. Besonders bevorzugt besteht der Rotorkern 40 aus etwa 40 Rotorblechen 44 oder umfasst etwa 40 Rotorbleche 44.

Die Anzahl der Rotorbleche 44 kann variabel sein. Insbesondere kann hierdurch die Dicke des Rotorkerns 40, je nach Anzahl der Rotorbleche 44, variiert werden und/oder, bei vorgegebener Dicke des Rotorkerns 40, eine Dickentoleranz bei den einzelnen Rotorblechen 44 ausgeglichen werden.

Besonders bevorzugt kann die Anzahl der Rotorbleche 44 um mehr als ein Blech und/oder um weniger als fünfzehn Bleche, insbesondere um höchstens zehn Bleche, variieren. Die Anzahl der Rotorbleche 44 beträgt besonders bevorzugt 40 ± 5 Bleche.

Die variablen Rotorbleche 44 sind vorzugsweise an der Unterseite (der Montageeinrichtung 50 zugewandte Seite) oder der Oberseite (von der Montageeinrichtung 50 abgewandte Seite) des Rotorkerns 40 vorgesehen. Insbesondere werden immer an der gleichen Seite zusätzliche Rotorbleche 44 vorgesehen oder vorhandene Rotorbleche 44 entfernt.

Die Dicke des Rotorkerns 40 beträgt vorzugsweise mehr als 10 mm, insbesondere mehr als 15 mm oder 18 mm, und/oder weniger als 30 mm, insbesondere weniger als 25 mm oder 22 mm. Ganz besonders bevorzugt beträgt die Dicke des Rotorkerns 40 etwa 20 mm.

Der Durchmesser des Rotorkerns 40 bzw. der Rotorbleche 44 ist vorzugweise größer als 50 mm oder 60 mm, insbesondere größer als 70 mm, und/oder kleiner als 100 mm oder 90 mm, insbesondere kleiner als 80 mm. Besonders bevorzugt beträgt der Durchmesser des Rotorkerns 40 bzw. der Rotorbleche 44 etwa 77 mm.

In radialer Richtung, insbesondere radial innen bzw. an ihrer der Welle 60 bzw. Rotationsachse A zugewandten Seite, sind die Magnetaufnahmen 41 vorzugsweise jeweils durch den inneren Abschnitt 43 begrenzt.

Die Magentaufnahmen 41 weisen jeweils einen (radialen) Anschlag 45 auf.

In radialer Richtung, insbesondere radial außen bzw. an ihrer von der Welle 60 bzw. Rotationsachse A abgewandten Seite, sind die Magnetaufnahmen 41 vorzugsweise jeweils durch den Anschlag 45 begrenzt.

Der jeweilige Anschlag 45 ist durch mehrere, hier drei, insbesondere punktförmige, Anschlagflächen 45A gebildet, wie insbesondere Fig. 3 und 4 veranschaulichen.

Die Anschlagsflächen 45A werden vom Rotorkern 40 gebildet, nämlich von mehreren Rotorblechen 44.

Die Anschläge 45 bzw. Anschlagsflächen 45A sind durch einzelne Rotorbleche 44 gebildet. Hierzu weist der Rotorkern 40 unterschiedlich geformte Rotorbleche 44 auf, wobei eine erste Form Anschlagflächen 45A aufweist bzw. bildet, während eine zweite Form keine derartigen Anschlagflächen aufweist.

Vorzugsweise werden durch ein Rotorblech 44 mehrere Anschlagflächen 45A gebildet, insbesondere für jede Magnetaufnahme 41 (genau) eine Anschlagfläche 45A.

Beim Darstellungsbeispiel sind mehrere, hier drei, Rotorbleche 44 mit Anschlagflächen 45A vorgesehen, zwischen denen jeweils Rotorbleche 44 ohne Anschlagflächen angeordnet sind, so dass in axialer Richtung mehrere, hier drei, insbesondere im Wesentlichen punktförmige, Anschlagflächen 45A pro Magnetaufnahme 41 gebildet werden bzw. sind.

Die Rotorbleche 44 mit Anschlagfläche 45A sind vorzugweise in etwa gleichem Abstand zueinander im Rotorkern 40 angeordnet. Bei variabler Anzahl an Rotorblechen 44 bleibt die Position der Rotorbleche 44 mit Anschlagfläche 45A im Rotorkern 40 vorzugsweise unverändert.

Es sind jedoch auch Lösungen möglich, bei denen mehrere Rotorbleche 44 mit Anschlagflächen 45A direkt übereinandergestapelt sind, so dass diese Rotorbleche 44 eine durchgehende bzw. sich in axialer Richtung erstreckende Anschlagfläche 45A bilden. Zwischen derartigen Rotorblechpaketen können dann wiederum Rotorbleche 44 ohne Anschlagfläche 45A angeordnet sein.

Die unterschiedlichen Rotorbleche 44 sind vorzugsweise aus dem gleichen Material hergestellt, insbesondere aus Elektroblech gestanzt oder geschnitten.

Der Rotor 20 bzw. Rotorkern 40 weist Stege 46 auf, die die Anschläge 45 bzw. Anschlagflächen 45A bilden oder aufweisen.

Die Stege 46 sind jeweils zwischen zwei Sektorabschnitten 42 bzw. deren Außenseiten 42A angeordnet bzw. bilden jeweils eine Brücke zwischen zwei Sektorabschnitten 42 bzw. Außenseiten 42A.

Vorzugsweise erstrecken sich die Stege 46 in Umfangrichtung und/oder sind radial außen bzw. am Außenumfang des Rotorkerns 40 angeordnet.

Mehrere Rotorbleche 44 weisen die Stege 46 auf bzw. bilden diese. Ein solches Rotorblech 44 weist insbesondere einen geschlossenen Außenumfang auf. Im Gegensatz hierzu sind Rotorbleche 44, die keine Anschlagflächen 45A bzw. keine Stege 46 aufweisen, vorzugsweise an ihrem Außenumfang an den Stellen geöffnet, an denen die Magnetaufnahmen 41 gebildet werden.

Fig. 5 zeigt in einem vergrößerten Ausschnitt einen der Stege 46 im Detail. Die übrigen Stege 46 sind vorzugsweise gleich ausgebildet.

Der Steg 46 weist vorzugsweise eine insbesondere mittige Verdickung bzw. Nase 47 auf, die die Anschlagfläche 45A bildet.

Die Nase 47 erstreckt sich vorzugsweise orthogonal zur Haupterstreckungsrichtung des Stegs 46 und/oder in radialer Richtung und/oder in die Magnetaufnahme 41 hinein. Durch die Nase 47 wird insbesondere eine zumindest im Wesentlichen punktförmige Anschlagfläche 45A realisiert.

Vorzugsweise ist der Anschlag 45 bzw. Steg 46 federnd/nachgiebig ausgebildet, insbesondere um einen Toleranzausgleich beim Einsetzen des Permanentmagneten 30 zu ermöglichen.

Dies wird insbesondere dadurch erreicht, dass der Anschlag 45 bzw. Steg 46 - zumindest bevor der Permanentmagnet 30 in die Magnetaufnahme 41 eingesetzt ist - radial nach innen (in Richtung der Rotationsachse A bzw. der Welle 60) gebogen bzw. gewölbt ist, wie in Fig. 5 mit Strichlinien angedeutet ist.

Beim Einsetzen des Permanentmagneten 30 kann es dazu kommen, dass dieser derart gegen die Anschlagfläche 45A bzw. Nase 47 bzw. den Steg 46 drückt, das sich der Steg 46 verbiegt/nachgibt. Durch die Innenwölbung kann jedoch verhindert werden, dass der Steg 46 zu weit nach außen gedrückt wird bzw. es kann verhindert werden, dass sich der Durchmesser des Rotorkerns 40 (im Bereich des Stegs 46) vergrößert bzw. zu stark vergrößert.

Fig. 5 zeigt in dem vergrößerten Ausschnitt exemplarisch den Fall, dass der Steg 46 bei eingesetztem Permanentmagneten 30 nach außen gedrückt ist, wobei die ursprüngliche Lage bzw. Wölbung des Stegs 46 (vor dem Einsetzen des Permanentmagneten 30) gestrichelt dargestellt ist. Je nach Größe des Permanentmagneten 30 und/oder der auf ihn wirkenden Kraft ist es jedoch auch möglich, dass der Steg 46 weniger oder gar nicht nach außen gedrückt ist/wird.

Besonders bevorzugt weist der Rotorkern 40 im Bereich der Anschläge 45 bzw. Stege 46 den gleichen oder einen geringeren Durchmesser auf als im Bereich der Sektorabschnitte 42, insbesondere auch bei eingesetztem Permanentmagneten 30. Mit anderen Worten ist der Abstand bzw. Radius zwischen Rotationsachse A und Anschlag 45 bzw. Steg 46 kleiner oder gleich dem (maximalen) Abstand bzw. Radius zwischen Rotationsachse A und Sektorabschnitt-Außenumfang.

Die Montageeinrichtung 50 ist vorzugsweise an der Welle 60 befestigt, insbesondere kraft-, form- und/oder stoffschlüssig. Bevorzugt erfolgt die Befestigung wie bei dem Rotorkern 40, beispielsweise mittels der Hervorhebungen 61 oder einer Presspassung.

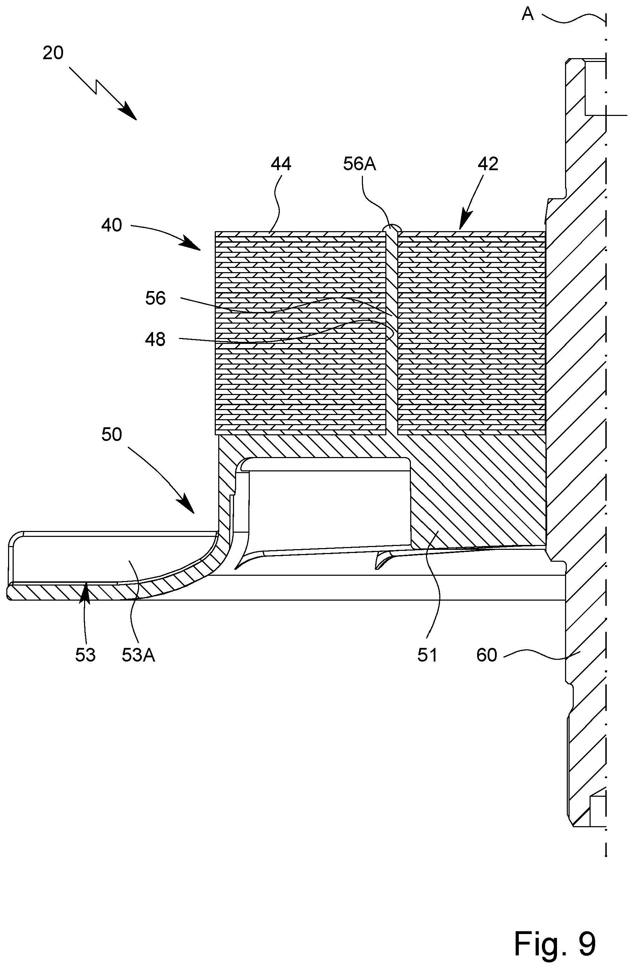

Zusätzlich oder alternativ kann die Montageeinrichtung 50 an dem Rotorkern 40 befestigt sein, insbesondere kraft-, form- und/oder stoffschlüssig. Beispielsweise kann die Montageeinrichtung 50 mit dem Rotorkern 40 verklebt, heißverstemmt und/oder verrastet sein und/oder eine Schnappverbindung bilden. Hierauf wird im Zusammenhang mit Fig. 9 später noch genauer eingegangen.

Auch ist es möglich, dass die Montageeinrichtung 50 an den Rotorkern 40 und/oder die Welle 60 angespritzt ist.

Die Montageeinrichtung 50 weist einen Grundkörper 51, mehrere, hier zehn, Fixierelemente 52 und/oder einen Lüfterabschnitt 53 auf.

Vorzugsweise ist die Montageeinrichtung 50, der Grundkörper 51 und/oder der Lüfterabschnitt 53 aus Kunststoff hergestellt und/oder einstückig gebildet, insbesondere spritzgegossen.

Die Montageeinrichtung 50 und/oder der Grundkörper 51 sind/ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse der Montageeinrichtung 50 und/oder des Grundkörpers 51.

Der Grundkörper 51 weist vorzugsweise einen äußeren Abschnitt 51A, einen inneren Abschnitt 51B und/oder einen Verbindungsabschnitt 51C auf.

Die Begriffe "äußerer" und "innerer" beziehen sich hierbei auf die Lage bezüglich der Rotationsachse A bzw. Welle 60. Der äußere Abschnitt 51A hat also einen größeren Abstand von der Rotationsachse A bzw. Welle 60 als der innere Abschnitt 51B.

Der äußere und/oder innere Abschnitt 51A, 51B sind/ist vorzugsweise zumindest im Wesentlichen ringförmig. Insbesondere sind der äußere Abschnitt 51A und der innere Abschnitt 51B konzentrisch zueinander angeordnet und/oder (in radialer Richtung) voneinander beabstandet.

Der innere Abschnitt 51B ist vorzugsweise auf die Welle 60 gesteckt bzw. mit der Welle 60 verbunden.

Der Verbindungsabschnitt 51C verbindet den äußeren Abschnitt 51A mit dem inneren Abschnitt 51C und/oder erstreckt sich zwischen den Abschnitten 51A, 51B in radialer Richtung und/oder ist stegartig bzw. speichenartig ausgebildet. Vorzugsweise sind mehrere Verbindungsabschnitte 51C ausgebildet.

Der Lüfterabschnitt 53 ist vorzugsweise ringförmig ausgebildet und/oder erstreckt sich in radialer Richtung vom Grundkörper 51, insbesondere dem äußeren Abschnitt 51A.

Mit dem Lüfterabschnitt 53 ist die Montageeinrichtung 50 als Lüfter ausgebildet bzw. kann die Montageeinrichtung 50 als Lüfter betrieben werden. Hierzu weist der Lüfterabschnitt 53 vorzugsweise entsprechende Lamellen bzw. Flügel 53A oder dergleichen auf.

Der Lüfterabschnitt 53 bzw. die als Lüfter ausgebildete Montageeinrichtung 50 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert die Montageeinrichtung 50 bzw. der Lüfterabschnitt 53 bei Betrieb des Elektromotors 1 um die Rotationsachse A und kann so entsprechend Luft fördern.

Die Montageeinrichtung 50 ist vorzugsweise axial unterhalb bzw. bodenseitig des Rotorkerns 40 angeordnet - zumindest während des Einbaus bzw. der Montage der Permanentmagnete 30.

Wie bereits eingangs erwähnt, beziehen sich die Bezeichnungen "unterhalb", "bodenseitig", etc. vorzugsweise nur auf die Ausrichtung des Elektromotors 1 bzw. Rotors 20 beim Einbau der Permanentmagneten 30 bzw. die in den Figuren dargestellte Ausrichtung. Wird der Elektromotor 1 in eine Maschine eingebaut, kann dies auch in einer anderen Ausrichtung erfolgen, bei der sich die Montageeinrichtung 50 beispielsweise oberhalb des Rotorkerns 40 befindet.

Vorzugsweise begrenzt die Montageeinrichtung 50, insbesondere der Grundkörper 51 oder dessen äußerer Abschnitt 51A, die Magnetaufnahmen 41 axial und/oder (zumindest während der Montage der Permanentmagneten 30) von unten. Vorzugsweise bildet die Montageeinrichtung 50, insbesondere der Grundkörper 51 oder der äußere Abschnitt 51A, einen axialen Anschlag bzw. ein axiales Gegenlager bzw. eine oder mehrere axiale Anlageflächen für die Permanentmagneten 30.

Auf der der Montageeinrichtung 50 gegenüberliegenden Seite, insbesondere von oben, ist die Magnetaufnahme 41 vorzugsweise offen. Die Permanentmagnete 30 können folglich von der der Montageeinrichtung 50 gegenüberliegenden Seite bzw. von oben in die Magnetaufnahme 41 eingesetzt werden.

Besonders bevorzugt weist die Montageeinrichtung 50, insbesondere der Grundkörper 51 oder dessen äußerer Abschnitt 51A, ein oder mehrere Anlageelemente bzw. Anschlagelemente 54 auf, die den axialen Anschlag bzw. das axiale Gegenlager bzw. axiale Anlageflächen für die Permanentmagneten 30 bilden.

Bevorzugt sind die Anschlagelemente 54 durch insbesondere linienartige Erhöhungen oder Rippen gebildet, wie insbesondere in Fig. 4 dargestellt. Hierbei verlaufen bzw. erstrecken sich die Anschlagelemente 54 vorzugsweise in Umfangsrichtung bzw. quer, insbesondere senkrecht, zur radialen Richtung und/oder in radialer Richtung. Exemplarisch sind in Fig. 4 zwei sich quer erstreckende Anschlagelemente 54A und zwei sich in radialer Richtung erstreckende Anschlagelemente 54B bezeichnet.

Beim Darstellungsbeispiel gemäß Fig. 4 sind jedem Permanentmagneten 30 bzw. jeder Magnetaufnahme 41 mehrere Anschlagelemente 54 zugeordnet, hier drei quer zur radialen Richtung verlaufende Anschlagelemente 54A und/oder zwei in radialer Richtung verlaufende Anschlagelemente 54B. Jedoch ist es auch möglich, jedem Permanentmagneten 30 bzw. jeder Magnetaufnahme 41 genau ein Anschlagelement 54 zuzuordnen oder ein Anschlagelement 54 für mehrere Permanentmagneten 30 bzw. Magnetaufnahmen 41 auszubilden. Beispielsweise könnte die Montageeinrichtung 50 bzw. der Grundkörper 51 bzw. der äußere Abschnitt 51A ein oder mehrere kreisförmige Anschlagelemente 54 aufweisen, die sich über alle Magnetaufnahmen 41 erstrecken.

Alternativ kann der axiale Anschlag bzw. das axiale Gegenlager bzw. die axiale Anlagefläche auch durch einen flächigen Bereich der Montageeinrichtung 50, insbesondere des Grundkörper 51 oder dessen äußeren Abschnitts 51A, gebildet sein.

Bevorzugt stehen die Permanentmagnete 30 über den Rotorkern 40 bzw. das oberste Rotorblech 44 über, wie in Fig. 3 angedeutet. Insbesondere sind die Magnetaufnahmen 41 entsprechend dimensioniert bzw. die Anschlagelemente 54 entsprechend angordnet. Hier ist die axiale Erstreckung der Permanentmagnete 30 also vorzugsweise größer als die axiale Erstreckung der Magnetaufnahmen 41 und/oder des Rotorkerns 40.

Alternativ können die Permanentmagnete 30 auch bündig mit dem Rotorkern 40 bzw. dem obersten Rotorblech 44 abschließen oder sich nur bis unterhalb des obersten Rotorblechs 44 erstrecken. Die axiale Erstreckung der Permanentmagneten 30 kann also auch gleich oder kleiner als die axiale Erstreckung der Magnetaufnahmen 41 bzw. des Rotorkerns 40 sein.

Besonders bevorzugt weist die Montageeinrichtung 50, insbesondere der Grundkörper 51 oder dessen äußerer Abschnitt 51A, Reservoirs/Aufnahmekammern 55 auf bzw. bildet solche.

Die Aufnahmekammern 55 dienen der Aufnahme von überdosiertem Klebstoff, was später im Zusammenhang mit dem Montageverfahren zur Montage der Permanentmagneten noch näher erläutert wird.

Die Reservoirs/Aufnahmekammern 55 sind vorzugsweise wannenförmig, beckenförmig oder trogförmig bzw. als Wannen, Becken oder Tröge ausgebildet.

Die Aufnahmekammern 55 sind vorzugsweise durch entsprechende (axiale) Vertiefungen in der Montageeinrichtung 50 bzw. dem Grundkörper 51 bzw. des äußeren Abschnitts 51A gebildet.

Die Aufnahmekammern 55 sind vorzugsweise (direkt) unterhalb der Permanentmagnete 30 bzw. Magnetaufnahmen 41 angeordnet.

Vorzugsweise sind die Aufnahmekammern 55 seitlich, insbesondere in radialer Richtung und/oder Umfangsrichtung, von einem oder mehreren Anschlagelementen 54 begrenzt.

Beim Darstellungsbeispiel gemäß Fig. 4 sind jedem Permanentmagneten 30 bzw. jeder Magnetaufnahme 41 mehrere Aufnahmekammern 55 zugeordnet. Jedoch ist es auch möglich, jedem Permanentmagneten 30 bzw. jeder Magnetaufnahme 41 genau eine Aufnahmekammer 55 zuzuordnen oder eine Aufnahmekammer 55 für mehrere Permanentmagneten 30 bzw. Magnetaufnahmen 41 auszubilden. **In** letzterem Fall könnte die Montageeinrichtung 50 bzw. der Grundkörper 51 bzw. der äußere Abschnitt 51A beispielsweise eine oder mehrere kreisförmige Vertiefungen/Aufnahmekammern 55 aufweisen, die sich über alle Magnetaufnahmen 41 erstrecken.

Die einem Permanentmagneten 30 bzw. einer Magnetaufnahme 41 zugeordnete(n) Aufnahmekammer(n) 55 hat/haben vorzugsweise ein (gemeinsames) Aufnahmevolumen von mindestens 0,25 ml oder 0,5 ml, insbesondere mindestens 1 ml oder 2 ml, und/oder von höchstens 10 ml, insbesondere höchstens 5 ml.

Die Fixierelemente 52 sind vorzugsweise zwischen dem äußeren Abschnitt 51A und dem inneren Abschnitt 51B angeordnet, wie insbesondere in Fig. 4 dargestellt. Vorzugsweise sind die Fixierelemente 52 (auch) jeweils zwischen zwei Verbindungsabschnitten 52C angeordnet. Mit anderen Worten werden vom äußeren Abschnitt 51A, inneren Abschnitt 51B und den Verbindungsabschnitten 51C jeweils insbesondere kreissektorförmige Bereiche gebildet bzw. abgegrenzt, in denen jeweils ein Fixierelement 52 angeordnet ist.

Die Fixierelemente 52 sind vorzugsweise gleichmäßig über einen Kreisumfang verteilt.

Vorzugsweise sind die Fixierelemente 52 radial innen an der Montageeinrichtung 50 bzw. in den jeweiligen Magnetaufnahme 41 und/oder nah an der Rotationsachse A bzw. Welle 60 angeordnet.

Vorzugsweise ist jedem Permanentmagneten 30 bzw. jeder Magnetaufnahme 41 (genau) ein Fixierelement 52 zugeordnet und/oder ragt in jede Magnetaufnahme 41 (genau) ein Fixierelement 52. Es sind aber auch Lösungen möglich, bei denen pro Magnetaufnahme 41 mehrere Fixierelemente 52 vorgesehen sind.

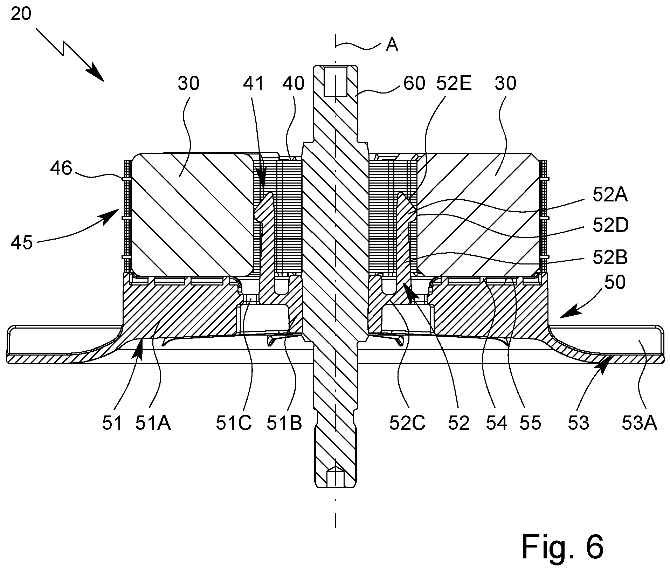

Der Aufbau und die Funktion der Fixierelemente 52 werden anhand der Figuren 6 und 7 näher erläutert. Die Fig. 6 zeigt einen schematischen Schnitt des vorschlagsgemäßen Rotors 20 durch zwei gegenüberliegender Magnetaufnahmen 41 bzw. Permanentmagnete 30 bzw. entlang der Rotationsachse A. Fig. 7 zeigt einen entsprechenden Schnitt, der im Bereich einer Magnetaufnahme 41 vergrößert dargestellt ist, und zwar vor bzw. beim Einsetzen des Permanentmagneten 30.

Im Folgenden werden der bevorzugte Aufbau und die bevorzugte Funktion anhand eines Fixierelements 52 näher erläutert. Die Ausführungen gelten vorzugsweise entsprechend für die übrigen Fixierelemente 52, die bevorzugt gleich ausgebildet sind.

Das Fixierelement 52 ist vorzugsweise länglich, insbesondere armartig, ausgebildet.

Das Fixierelement 52 weist vorzugsweise ein freies Ende bzw. einen Kopf 52A, einen Verbindungsarm 52B und/oder ein festes Ende bzw. einen Anbindungsabschnitt 52C auf. Der Verbindungsarm 52B verbindet den Kopf 52A und den Anbindungsabschnitt 52C miteinander bzw. schließt sich unmittelbar an den Kopf 52A und den Anbindungsabschnitt 52C an.

Das Fixierelement 52 ist mit dem Grundkörper 51 verbunden bzw. einstückig gebildet, insbesondere mit dem inneren Abschnitt 51B und/oder über seinen Anbindungsabschnitt 52C.

Besonders bevorzugt ist das Fixierelement 52 einstückig mit dem Grundkörper 51 gebildet. Es sind jedoch auch andere Lösungen möglich, bei denen das Fixierelement 52 als separates Bauteil ausgebildet und vorzugsweise formschlüssig und/oder durch Presspassung mit dem Grundkörper 51 verbunden ist. Beispielsweise könnte das Fixierelement 51 in den Grundkörper 51 gesteckt sein, insbesondere mit seinem Anbindungsabschnitt 52C.

Vorzugsweise ist das Fixierelement 52 aus einem elastischen Material und/oder dem gleichen Material wie der Grundkörper 51, insbesondere Kunststoff, gebildet, vorzugsweise spritzgegossen.

Das Fixierelement 52 ist flexibel bzw. biegbar ausgebildet. Insbesondere kann das Fixierelement 52 in radialer Richtung und/oder um sein festes Ende bzw. den Anbindungsabschnitt 52C und/oder relativ zum Grundkörper 51 gebogen bzw. verschwenkt werden.

Das Fixierelement 52, insbesondere der Verbindungsarm 52B, erstreckt sich vorzugsweise zumindest im Wesentlichen in axialer Richtung und/oder ragt quer, insbesondere zumindest im Wesentlichen senkrecht, vom Grundkörper 51 ab.

Hierbei ist zu berücksichtigen, dass sich das Fixierelement 52 bzw. der Verbindungsarm 52B wegen der Flexibilität/Biegbarkeit nicht exakt parallel zur Rotationsachse A bzw. Welle 60 erstrecken muss, sondern auch einen (geringen) Winkel mit der Rotationsachse A bzw. Welle 60 einschließen kann - sowohl vor als auch nach der Montage des Permanentmagneten 30.

Unter "zumindest im Wesentlichen in axialer Richtung" ist also vorzugsweise zu verstehen, dass sich das Fixierelement 52 bzw. der Verbindungsarm 52B mehr in axiale Richtung als in radiale Richtung erstreckt und/oder mit der Rotationsachse A bzw. Welle 60 einen Winkel von weniger als 45° oder 30°, insbesondere weniger als 20° oder 10°, einschließt.

Zumindest vor der Montage weist die (Haupt-)Erstreckung bzw. Längserstreckung des Fixierelements 52 bzw. Verbindungsarms 52B - zusätzlich zu der axialen Komponente - vorzugsweise eine radial nach außen gerichtete Komponente auf, wie in Fig. 7 dargestellt.

Vorzugsweise beträgt der Winkel zwischen der Rotationsachse A bzw. Welle 60 und dem Fixierelement 52 bzw. Verbindungsarm 52B vor der Montage des Permanentmagneten 30 mindestens 3°, insbesondere mindestens 5° und/oder höchstens 15°, insbesondere höchstens 10°.

Vorzugsweise beträgt der Winkel zwischen der Haupterstreckungsrichtung des Grundkörpers 51 und dem Fixierelement 52 bzw. Verbindungsarm 52B vor der Montage des Permanentmagneten 30 und/oder vor der Montage der Montageeinrichtung 50 am Rotor 20 höchstens 87°, insbesondere höchstens 85° und/oder mindestens 75°, insbesondere mindestens 80°.

Besonders bevorzugt schließt das Fixierelement 52 bzw. der Verbindungsarm 52B vor der Montage des Permanentmagneten 30 einen größeren Winkel mit der Rotationsachse A bzw. Welle 60 ein als im montierten Zustand des Permanentmagneten, wie auch in den Figuren in Fig. 6 (montierter Zustand) und Fig. 7 (unmontierter Zustand) dargestellt.

Im montierten Zustand erstreckt sich das Fixierelement 52 vorzugsweise im Wesentlichen parallel zu Rotationsachse A, wie in Fig. 6 dargestellt. Abhängig von der radialen Erstreckung des Permanentmagneten 30 kann jedoch auch im montierten Zustand noch eine Abweichung hiervon vorhanden sein.

Vorzugsweise ist das Fixierelement 52 zumindest im Wesentlichen L-förmig ausgebildet, wobei der Anbindungsabschnitt 52C einen ersten Schenkel und der Verbindungsarm 52B, insbesondere mit dem Kopf 52A, einen zweiten Schenkel bildet.

Vorzugsweise erstreckt sich der Anbindungsabschnitt 52C in radialer Richtung und/oder der Verbindungsarm 52B zumindest im Wesentlichen in axialer Richtung.

Im Vergleich zum Verbindungsarm 52B ist der Anbindungsabschnitt 52C vorzugsweise kurz, insbesondere mit einer Längserstreckung von weniger als ein Drittel oder ein Viertel der Längserstreckung des Verbindungsarms 52B, so dass die Haupterstreckungsrichtung des Fixierelements 52 also durch den Verbindungsarm 52B gegeben ist.

Die Haupterstreckung bzw. axiale Erstreckung des Fixierelements 52 ist vorzugsweise geringer als die axiale Erstreckung der Magnetaufnahme 41. Mit anderen Worten ragt das Fixierelement 52 vorzugsweise axial in die Magnetaufnahme 41 hinein, aber nicht durch die Magnetaufnahme 41 hindurch.

Besonders bevorzugt beträgt die Haupterstreckung bzw. axiale Erstreckung des Fixierelements 52 zumindest im Wesentlichen die Hälfte der axialen Erstreckung der Magnetaufnahme 41. Insbesondere ist der Kopf 52A zumindest im Wesentlichen mittig (in axialer Richtung) in der Magnetaufnahme 41 angeordnet.

Das Fixierelement 52, insbesondere der Kopf 52A, weist vorzugsweise eine Anlagefläche 52D zur Anlage am Permanentmagneten 30 auf oder bildet eine solche, insbesondere an seiner radial nach außen weisenden Seite.

Der Kopf 52A ist vorzugsweise abgerundet, insbesondere an seiner radial außen liegenden Seite bzw. im Bereich der Anlagefläche 52D.

An seiner Oberseite bzw. der vom Verbindungsarm 52B abgewandten Seite weist der Kopf 52A vorzugsweise eine Schräge 52E für die Montage des Permanentmagneten 30 auf. Hierauf wird später noch genauer eingegangen.

Im montierten Zustand bzw. bei eingesetztem Permanentmagneten 30, wie in Fig. 6 dargestellt, drückt das Fixierelement 52, insbesondere dessen Kopf 52A, mit der Anlagefläche 52D gegen den Permanentmagneten 30, insbesondere eine radial innenliegenden Stirnseite des Permanentmagneten 30, und/oder liegt dort an. Besonders bevorzugt liegt die Anlagefläche 52D zumindest im Wesentlichen axial mittig gegen den Permanentmagneten 30 an.

Das Fixierelement 52 ist vorzugsweise gegen den Permanentmagneten 30 gespannt und/oder übt eine radial nach außen gerichtete Kraft auf den Permanentmagneten 30 aus.

Das Fixierelement 52 drückt vorzugsweise in radialer Richtung nach außen auf den Permanentmagneten 30 bzw. drückt den Permanentmagneten 30 gegen den Anschlag 45 bzw. den/die Anschlagfläche(n) 45A.

Insbesondere ist der Permanentmagnet 30 zwischen dem Anschlag 45 bzw. der/den Anschlagfläche(n) 45A und dem Fixierelement 52 bzw. dessen Kopf 52A bzw. der Anschlagfläche 52D fixiert bzw. geklemmt.

Es sind auch Lösungen möglich, bei denen das Fixierelement 52 mit dem Permanentmagneten 30 einen (axialen) Formschluss bzw. eine (axiale) Rast- oder Schnappverbindung bildet bzw. bei denen der Kopf 52A als Rastnase ausgebildet ist.

Hierzu kann das Fixierelement 52, insbesondere mit dem Kopf 52A, in eine entsprechende Ausnehmung des Permanentmagneten 30 o. dgl. eingreifen.

Alternativ ist es auch möglich, dass das Fixierelement 52 mit dem Kopf 52A den Permanentmagneten 30 (an der Magnet-Oberseite bzw. der von der Montageeinrichtung 50 abgewandten Seite) umgreift bzw. übergreift, um einen Formschluss bzw. eine Rast- oder Schnappverbindung zu bilden bzw. um den Permanentmagneten 30 axial zu sichern. In diesem Fall ragt das Fixierelement 52 insbesondere durch die Magnetaufnahme 41 hindurch.

Über die Klemmung und/oder Rastung der Fixierelemente 52 kann vorzugsweise die Montageeinrichtung 50 - zusätzlich oder alternativ zu anderen Befestigungen/Befestigungsmöglichkeiten - am Rotorkern 40 gehalten sein.

Nachfolgend wird ein bevorzugtes Verfahren für die Montage bzw. das Einsetzen eines Permanentmagneten 30 in den Rotor 20 bzw. Rotorkern 40 anhand von Fig. 7 näher erläutert. Die übrigen Permanentmagnete 30 werden bzw. sind vorzugsweise in gleicher Weise montiert, so dass die Ausführungen entsprechend gelten.

Wie bereits eingangs erwähnt, ist der Permanentmagnet 30 bei der Montage bzw. beim Einsetzen vorzugsweise noch unmagnetisiert bzw. als ein unmagnetisiertes, permanent magnetisierbares Bauteil zu verstehen. Es ist aber auch möglich, dass ein bereits magnetisiertes, permanent magnetisierbares Bauteil bzw. ein magnetisierter Permanentmagnet 30 eingesetzt bzw. montiert wird.

Bei bzw. vor der Montage des Permanentmagneten 30 sind der Rotorkern 40 und die Montageeinrichtung 50 vorzugsweise bereits aneinander und/oder an der Welle 60 befestigt.

Die Magnetaufnahme 41 ist vorzugsweise seitlich bzw. in Umfangsrichtung von jeweils zwei benachbarten Sektorabschnitten 42 bzw. deren Innenseiten 42B, radial außen von dem Anschlag 45, radial innen von dem innerem Abschnitt 43 und/oder axial, insbesondere bodenseitig bzw. von unten, von der Montageeinrichtung 50, insbesondere dem/den Anschlagelement(en) 54 begrenzt bzw. definiert. Auf der der Montageeinrichtung 50 gegenüberliegenden Seite, insbesondere von oben, ist die Magnetaufnahme 41 vorzugsweise offen.

Optional kann bei der Montage eine Führungseinrichtung 70, insbesondere Führungsschiene, verwendet werden, um den Permanentmagneten 30 beim Einsetzen in die Magnetaufnahme 41 zu führen, insbesondere ein Verkanten des Permanentmagneten 30 zu verhindern. Je nach Bedarf kann die Führungseinrichtung 70 jedoch auch weggelassen werden, beispielsweise wenn der Anschlag 45 eine durchgehende, sich axial erstreckende Fläche aufweist und/oder eine Führung für den Permanentmagneten 30 bildet.

Vorzugsweise wird die Führungseinrichtung 70 radial von außen an die Magnetaufnahme 41 herangefahren bzw. von radial außen an der Magnetaufnahme 41 angeordnet. Hierzu weist die Führungseinrichtung 70 insbesondere Ausnehmungen 71 für die Stege 46 auf. Wegen der Ausnehmungen 71 kann die Führungseinrichtung 70 zwischen den Stegen 46 (radial) in die Magnetaufnahme 41 hineinragen.

Es sind jedoch auch Lösungen möglich, bei denen die Führungseinrichtung 70 axial von der offenen Seite der Magnetaufnahme 41 bzw. von oben in die Magnetaufnahme 41 eingeführt wird bzw. dazu ausgebildet ist.

Die Führungseinrichtung 70 weist vorzugsweise eine sich axial erstreckende Führungsfläche bzw. Führungskante 72 auf, entlang der der Permanentmagnet 30 geführt werden kann.

Besonders bevorzugt sind die Führungskante 72 und die Anschlagfläche(n) 45A des Anschlags 45 derart voneinander beabstandet, dass die Führungskante 72 radial weiter innen liegt als die Anschlagsfläche(n) 45A. Hierzu können die Ausnehmungen 71 entsprechend dimensioniert sein. Bei der Ausführung mit von oben eingeführter Führungseinrichtung 70 weist diese vorzugsweise eine entsprechende Dicke (in radialer Richtung) auf.

Besonders bevorzugt wird vor dem Einsetzen des Permanentmagneten 30 Klebstoff an der Magnetaufnahme 41 bzw. den seitlichen Begrenzungen der Magnetaufnahme 41, insbesondere den beiden entsprechenden Sektorabschnitten 42, aufgetragen bzw. appliziert, insbesondere an der oberen bzw. offenen Seite. Grundsätzlich sind jedoch - wie bereits oben beschrieben - auch Lösungen möglich, bei denen auf Klebstoff verzichtet werden kann. In diesem Fall entfällt der Schritt des Klebstoffauftragens.

Der Permanentmagnet 30 wird axial von der offenen Seite der Magnetaufnahme 41 bzw. von oben in die Magnetaufnahme 41 eingesetzt bzw. eingeführt, wie in Fig. 7 mit einem Pfeil R verdeutlicht ist.

Beim Einsetzen wird der Permanentmagnet 30 vorzugsweise entlang der Führungskante 72 geführt. Aufgrund der Beabstandung von Anschlag 45 bzw. Anschlagfläche(n) 45A und Führungskante 72 ist der Permanentmagnet 30 ebenfalls vom Anschlag 45 bzw. den Anschlagfläche(n) 45A (radial) beabstandet. Insbesondere wenn keine Führungseinrichtung 70 verwendet wird bzw. der Anschlag 45 die Führung bildet kann der Permanentmagnet 30 jedoch auch bereits beim Einführen an der Anschlagfläche 45A anliegen bzw. daran geführt werden.

Wenn der Permanentmagnet 30 teilweise, insbesondere etwa zur Hälfte, in die Magnetaufnahme 41 eingeschoben wurde, trifft der Permanentmagnet 30 vorzugsweise auf das Fixierelement 52, insbesondere den Kopf 52A, bzw. kommt es zwischen Permanentmagnet 30 und Fixierelement 52 bzw. Kopf 52A zur Anlage, insbesondere zwischen der Einführschräge 31 des Permanentmagneten 30 und der Schräge 52E des Fixierelements 52. Es ist auch möglich, nur eine Schräge entweder am Permanentmagneten 30 oder am Fixierelement 52 vorzusehen und auf eine entsprechende Gegenschräge zu verzichten.

Beim weiteren Einschieben drückt bzw. verspannt bzw. verformt bzw. verbiegt der Permanentmagnet 30 vorzugsweise das Fixierelement 52 in radialer Richtung nach innen, insbesondere bis der Permanentmagnet 30 an der Schräge 52E abgeglitten ist und/oder die Anlagefläche 52D am Permanentmagneten 30 zur Anlage kommt. Das Fixierelement 52 ist dann vorzugsweise (in radialer Richtung) gegen den Permanentmagneten 30 gespannt.

Das Verspannen bzw. Verbiegen/Verformen des Fixierelements 52 wird insbesondere durch die Schräge(n) 31, 52E und/oder dadurch begünstigt, dass die Erstreckung des Fixierelement 52 zumindest vor dem Verspannen/Verbiegen/Verformen auch eine radial nach außen gerichtete Komponente aufweist, wie zuvor beschrieben.

Der Permanentmagnet 30 wird dann weiter in axialer Richtung bzw. Einführrichtung R in die Magnetaufnahme 41 geschoben, bis er vollständig in die Magnetaufnahme 41 eingesetzt ist bzw. axial ausgerichtet/positioniert ist. Insbesondere wird der Permanentmagnet 30 so weit in axialer Richtung bzw. Einführrichtung R in die Magnetaufnahme 41 geschoben, bis er axial an die Montageeinrichtung 50 bzw. den Grundkörper 51, insbesondere das/die Anschlagelement(e) 54, anschlägt bzw. dort zur Anlage kommt.

Wie bereits zuvor erwähnt, sind auch Lösungen möglich, bei denen das Fixierelement 52 (zusätzlich) mit dem Permanentmagneten verrastet wird, insbesondere indem der Kopf 52A in eine Ausnehmung des Permanentmagneten 30 eingreift oder den Permanentmagneten 30 an seiner Oberseite bzw. von der Montageeinrichtung 50 abgewandten Seite übergreift. In diesem Fall erfolgt das Eingreifen bzw. Übergreifen vorzugsweise, sobald der Permanentmagnet 30 vollständig eingesetzt ist bzw. axial anschlägt. Der Kopf 52A ist insbesondere in einer entsprechenden axialen Position bzw. Höhe in oder oberhalb der Magnetaufnahme 41 angeordnet.

Falls Klebstoff verwendet wird, schleppt der Permanentmagnet 30 diesen vorzugsweise beim Einsetzen in die Magnetaufnahme 41 mit bzw. nach unten, so dass sich Spalte zwischen Permanentmagnet 30 und Magnetaufnahme 41, insbesondere Rotorkern 40 bzw. Sektorabschnitten 42, mit Klebstoff füllen.

Überdosierter Klebstoff sammelt sich vorzugsweise in der/den Aufnahmekammer(n) 55 bzw. wird dort eingetragen. Besonders bevorzugt verklebt der überdosierte Klebstoff in den Aufnahmekammern 55 den Permanentmagneten 30 zusätzlich mit der Montageeinrichtung 50.

Das gegen den Permanentmagneten 30 gespannte Fixierelement 52 übt eine radial nach außen gerichtete Kraft auf den Permanentmagneten 30 aus.

Falls keine Führungseinrichtung 70 verwendet wird, ist der Permanentmagnet 30 nach dem axialen Ausrichten/Positionieren auch bereits in radialer Richtung positioniert/ausgerichtet und wird von dem Fixierelement 52 in dieser Position gehalten bzw. (vor-)fixiert. Insbesondere drückt das Fixierelement 52 den Permanentmagneten 30 gegen den Anschlag 45, so dass dieser zwischen Fixierelement 52 und Anschlag 45 geklemmt ist.

Falls die Führungseinrichtung 70 verwendet wird, wird diese nach dem axialen Positionieren/Ausrichten entfernt - bei Verwendung von Klebstoff bevor dieser ausgehärtet ist.

Aufgrund der bevorzugten Beabstandung von Führungskante 72 und Anschlag 45 bzw. Anschlagfläche(n) 45A liegt der Permanentmagnet 30 zunächst nur an der Führungskante 72, jedoch nicht an dem Anschlag 45 bzw der/den Anschlagfläche(n) 45A (radial) an. Wird nun die Führungseinrichtung 70 entfernt, entsteht daher (temporär) eine Lücke zwischen dem Permanentmagneten 30 und dem Anschlag 45. Diese wird jedoch wegen der Vorspannung des Fixierelements 52 unmittelbar nach Entfernen der Führungseinrichtung 70 geschlossen.

Unmittelbar nach Entfernen der Führungseinrichtung 70 drückt bzw. schiebt das gegen den Permanentmagneten 30 gespannte Fixierelement 52 den Permanentmagneten 30 radial nach außen, bis dieser an den Anschlag 45 bzw. den/die Anschlagfläche(n) 45A stößt. Der Permanentmagnet 30 wird so in radialer Richtung vom Fixierelement 52 positioniert.

Bei dieser Positionierung entspannt sich das Fixierelement 52 teilweise. Vorzugsweise ist aber die verbleibende Vorspannung groß genug, um den Permanentmagneten 30 in Position zu halten bzw. zu klemmen bzw. zu fixieren, insbesondere - falls Klebstoff verwendet wird - vorzufixieren bis der Klebstoff ausgehärtet ist.

Gegebenenfalls kann jedoch auch eine zusätzliche Einrichtung (nicht dargestellt) verwendet werden, die zwischen das Fixierelement 52 und den inneren Abschnitt 43 geschoben bzw. geklemmt wird, um eine zusätzliche radial nach außen wirkende Kraft auf den Permanentmagneten 30 auszuüben. Hierzu ist das Fixierelement 52 vorzugsweise auf seiner radial innen liegenden Seite bzw. der der Anschlagfläche 52D gegenüberliegenden Seite angeschrägt, wie auch in Fig. 6 und 7 angedeutet. Eine solche Einrichtung wird nach dem Aushärten des Klebstoffs vorzugsweise wieder entfernt.

Nach der Montage des Permanentmagneten 30 und/oder dem Aushärten des Klebstoffs verbleibt die Montageeinrichtung 50 vorzugsweise am Rotor 20 bzw. bildet einen Teil des Rotors 20 bzw. Elektromotors 1 im Betrieb.

Bevorzugt werden die Permanentmagnete 30 erst im Rotor 20 und/oder erst nach der Montage und/oder nach oder während dem Aushärten des Klebstoffs magnetisiert. In diesem Sinne werden bei dem Montageverfahren bevorzugt noch nicht magnetisierte Permanentmagnete 30 bzw. permanent magnetisierbare Bauteile wie beschrieben verwendet, insbesondere in die Magnetaufnahmen 41 eingesetzt bzw. verklebt. Es ist aber auch möglich, bereits magnetisierte Permanentmagnete 30 bei der Montage zu verwenden.

Durch das vorschlagsgemäße Verfahren wird eine einfach, schnelle, zuverlässige, kostengünstige und/oder sichere Montage des/der Permanentmagneten 30 ermöglicht. Insbesondere kann eine einfache, sichere und zuverlässige Positionierung bzw. (Vor-)Fixierung des/der Permanentmagneten am Rotor bzw. Rotorkern sichergestellt werden.

Einzelne Verfahrensschritte des Verfahrens können ggf. auch in einer anderen Reihenfolge erfolgen und/oder weggelassen werden.

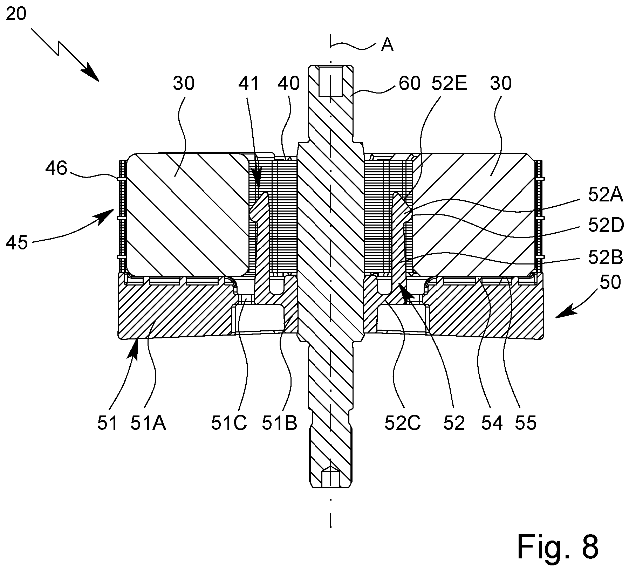

Nachfolgend werden weitere Ausführungsformen des vorschlagsgemäßen Rotors 20, der auch für den vorschlagsgemäßen Elektromotor 1 entsprechend eingesetzt werden kann, anhand der Figuren 8 bis 11erläutert, wobei primär lediglich auf wesentliche Unterschiede bzw. neue Aspekte eingegangen wird. Die bisherigen Ausführungen und Erläuterungen gelten insbesondere entsprechend oder ergänzend, auch ohne Wiederholung.

Wie zuvor beschrieben und in den Figuren 1 bis 7 dargestellt, ist die Montageeinrichtung 50 bevorzugt als Lüfter ausgebildet bzw. weist den Lüfterabschnitt 53 auf. Es ist jedoch auch möglich, die Montageeinrichtung 50 ohne Lüfterfunktion bzw. ohne Lüfterabschnitt 53 auszubilden. Fig. 8 zeigt den Rotor 20 in einer zweiten Ausführungsform mit einer solchen Montageeinrichtung 50 in einem zu Fig. 6 korrespondierenden Schnitt.

Die zweite Ausführungsform unterscheidet sich vorzugsweise von der ersten Ausführungsform nur dadurch, dass kein Lüfterabschnitt 53 an der Montageeinrichtung 50 vorgesehen ist. Im Übrigen ist der Rotor 20 bzw. die Montageeinrichtung 50 vorzugsweise wie bei der ersten Ausführungsform ausgebildet und weist insbesondere die Fixierelemente 52 und/oder Aufnahmekammern 55 auf. Die vorherigen Erläuterungen gelten daher entsprechend.

Bevorzugt verbleibt auch die Montageeinrichtung 50 der zweiten Ausführungsform am Rotor 20 bzw. wird am Rotor 20 wie für die erste Ausführungsform beschrieben befestigt. Alternativ ist es jedoch auch möglich, dass die Montageeinrichtung 50 nur für die Positionierung und/oder Vorfixierung der Permanentmagnete 30 verwendet und anschließend - insbesondere nach Aushärten des Klebstoffs - wieder entfernt wird.

Gemäß einer weiteren, nicht dargestellten Ausführungsform ist es auch möglich, die Montageeinrichtung 50 noch weiter zu reduzieren und den Grundkörper 51 nur mit dem inneren Abschnitt 53B und den Fixierelementen 52 auszubilden. Insbesondere bildet die Montageeinrichtung 50 dann keine axiale Begrenzung der Magnetaufnahmen 41 und keine Aufnahmekammern 55. In einer solchen Ausführung ist die Montageeinrichtung 50 also als auf die Welle 60 aufsteckbarer Ring ausgebildet, von dem die Fixierelemente 52 axial abragen. Je nach Bedarf könnte eine solche Montageeinrichtung 50 am Rotor 20 verbleiben - beispielsweise wenn die Permanentmagneten 30 nur mittels Klemmung bzw. ohne Klebung fixiert werden - oder nach der Montage bzw. Verklebung wieder entfernt werden.

Wie bereits im Zusammenhang mit der ersten Ausführungsform erwähnt, kann die Montageeinrichtung 50 auch - zusätzlich oder alternativ zum Befestigen an der Welle 60 - kraft-, form- und/oder stoffschlüssig (direkt) mit dem Rotorkern 40 verbunden sein. Die Fig. 9 zeigt beispielhaft den Rotor 20 gemäß einer dritten Ausführungsform mit einer solchen Befestigung. Fig. 9 zeigt hierbei einen Schnitt entlang der Rotationsachse A durch einen Sektorabschnitt 42 des Rotorkerns 40.

Zur Befestigung der Montageeinrichtung 50 am Rotorkern 40 weist die Montageeinrichtung 50 gemäß der dritten Ausführungsform vorzugsweise ein oder mehrere Befestigungselemente 56 auf.

Die Befestigungselemente 56 sind vorzugsweise einstückig mit dem Grundkörper 51 und/oder aus dem gleichen Material, insbesondere Kunststoff, gebildet, vorzugsweise spritzgegossen.

Vorzugsweise sind die Befestigungselemente 56 stiftartig ausgebildet und/oder ragen bzw. erstrecken sich, insbesondere vom Grundkörper 51, in axialer Richtung.

Vorzugsweise ragen die Befestigungselemente 56 in den Rotorkern 40, insbesondere dessen Sektorabschnitte 42, oder greifen darin ein. Besonders bevorzugt erstrecken sich die Befestigungselemente 56 jeweils (vollständig) durch den Rotorkern 40 bzw. die jeweiligen Sektorabschnitte 42 hindurch.

Hierbei können pro Sektorabschnitt 42 mehrere Befestigungselemente 56 oder nur ein Befestigungselement 56 vorgesehen sein. Auch ist es möglich, dass weniger Befestigungselemente 56 als Sektorabschnitte 42 vorgesehen sind, so dass beispielsweise nur für jeden zweiten Sektorabschnitt 42 ein Befestigungselement 56 vorgesehen ist (bei dem Beispiel mit zehn Sektorabschnitten 42 also nur fünf Befestigungselemente 56).

Die Befestigungselemente 56 sind vorzugsweise gleichmäßig über einen Kreisumfang verteilt, insbesondere um Unwuchten zu vermeiden.

Der Rotorkern 40 bzw. die Sektorabschnitte 42 weisen vorzugsweise entsprechende Durchbrechungen 48 auf, in die jeweils ein Befestigungselement 56 eingreift oder (hindurch) ragt. Die Durchbrechungen 48 erstrecken sich vorzugsweise entsprechend in axialer Richtung. Insbesondere weist jedes Rotorblech 44 entsprechende Löcher auf, so dass die übereinandergestapelten Rotorbleche 44 mit den Löchern die jeweilige Durchbrechung 48 bilden.

Durch den Eingriff der Befestigungselemente 56 in den Rotorkern 40, insbesondere die Sektorabschnitte 42 bzw. Durchbrechungen 48, ist die Montageeinrichtung 50 vorzugsweise kraft-, form- und/oder stoffschlüssig mit dem Rotorkern 40 verbunden.

Besonders bevorzugt weisen die Befestigungselemente 56 jeweils einen Kopf 56A an ihrem freien Ende bzw. dem vom Grundkörper 51 abgewandten Ende auf. Der Kopf 56A ist vorzugsweise an der Oberseite des Rotorkerns 40 bzw. Sektorabschnitts 42 bzw. des obersten Rotorblechs 44 angeordnet.

Der Kopf 56A hat vorzugsweise einen größeren Durchmesser als die Durchbrechung 48 bzw. als der restliche Abschnitt des Befestigungselements 56.

Besonders bevorzugt ist das Befestigungselement 56 bzw. der Kopf 56A mit dem Rotorkern 40 heißverstemmt. In diesem Fall ist es nicht nötig, den Kopf 56A bereits vor der Montage auszubilden. Stattdessen kann der Kopf 56A, nachdem das Befestigungselement 56 durch die Durchbrechung 48 hindurchgesteckt wurde, mittels Heißverstemmen erzeugt werden.

Alternativ oder zusätzlich ist es jedoch auch möglich, den Kopf 56A flexibel auszubilden, so dass er bei der Montage durch die Durchbrechung 48 hindurch geschoben werden kann. Ggf. kann dann auf ein Heißverstemmen verzichtet werden.

Der Kopf 56A bildet vorzugsweise einen Formschluss mit dem Rotorkern 40. Auf diese Weise wird bevorzugt eine formschlüssige Verbindung zwischen Montageeinrichtung 50 und Rotorkern 40 erzielt. Im Falle des Heißverstemmens kann zusätzlich auch ein stoffschlüssige Verbindung gebildet sein.

Alternativ oder zusätzlich kann auch eine Presspassung oder sonstige Verbindung zwischen Befestigungselement 56 und Durchbrechung 48 vorgesehen sein.

Wie bereits eingangs erwähnt, können der Rotorkern 40 und die Montageeinrichtung 50 auch auf andere Arten miteinander verbunden sein, beispielsweise mittels einer Schnappverbindung. Die Befestigungselemente 56 sind dann entsprechend ausgebildet, beispielsweise als Schnapphaken oder dergleichen.

Alternativ oder zusätzlich kann eine Befestigung der Montageeinrichtung 50 auch über die Klemmung der Fixierelemente 52 an den Permanentmagneten 30 - und somit mittelbar am Rotorkern 40 - erfolgen, wie bereits erläutert.

Beim Darstellungsbeispiel gemäß Fig. 9 weist die Montageeinrichtung 50 den Lüfterabschnitt 53 auf. Selbstverständlich ist es aber auch möglich, die Montageeinrichtung 50 gemäß dritter Ausführungsform ohne Lüfterabschnitt 53 auszubilden.

Vorzugsweise gelten die Ausführungen bezüglich der ersten und zweiten Ausführungsform für die dritte Ausführungsform entsprechend. Insbesondere weist auch die Montageeinrichtung 50 gemäß der dritten Ausführungsform die Fixierelemente 52 und/oder Aufnahmekammern 55 auf. Die Befestigung von Rotorkern 40 und Montageeinrichtung 50 gemäß der dritten Ausführungsform kann jedoch prinzipiell auch unabhängig von den Fixierelementen 52 und/oder Aufnahmekammern 55 oder sonstigen Merkmalen der ersten bzw. zweiten Ausführungsform realisiert sein.

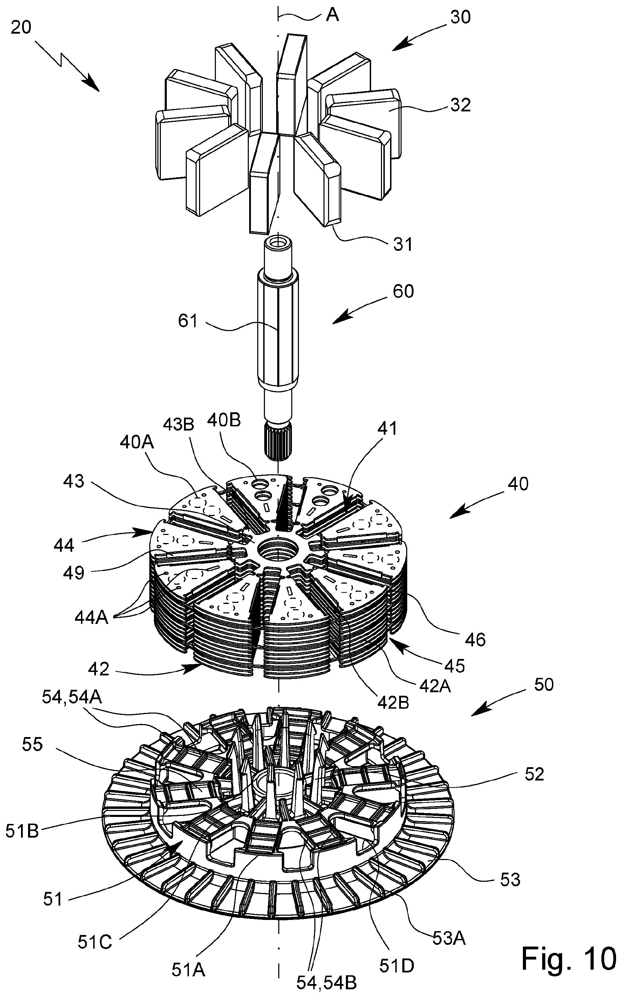

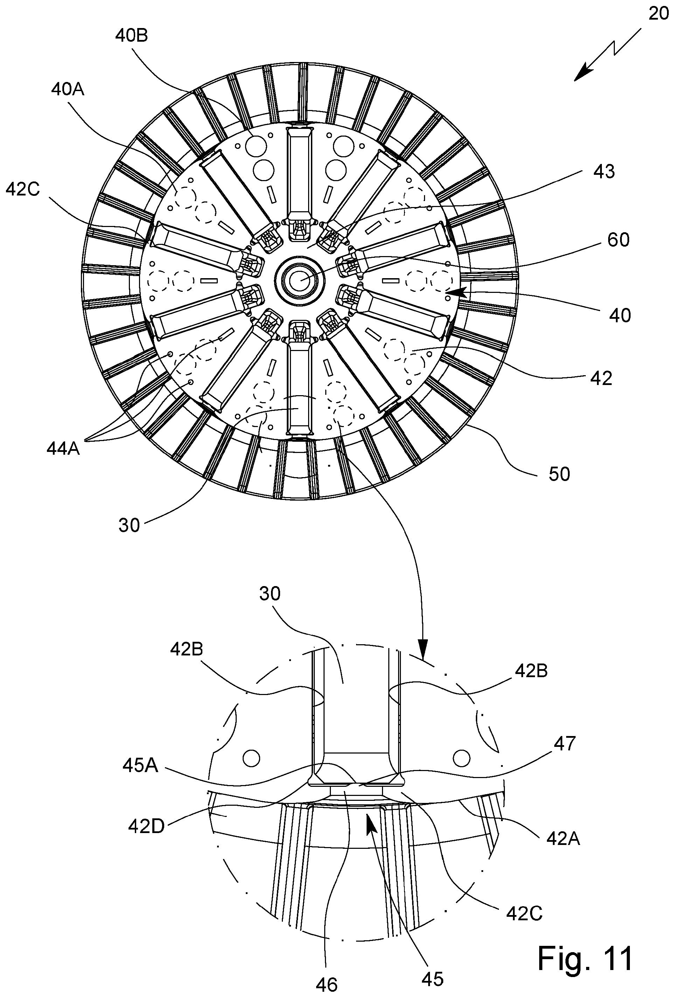

Die Figuren 10 und 11 zeigen eine bevorzugte vierte Ausführungsform des Rotors 20. Hierbei zeigt die Fig. 10 den Rotor 20 in einer schematischen Explosionsdarstellung und Fig. 11 in einer schematischen Draufsicht, wobei ein Teil des Rotors 20 zusätzlich in einem vergrößerten Ausschnitt dargestellt ist. Die Darstellung des Rotors 20 gemäß vierter Ausführungsform in den Figuren 10 und 11 entspricht hierbei der Darstellung des Rotors 20 gemäß erster Ausführungsform in den Figuren 4 und 5.

Es wird wiederum primär nur auf die wesentlichen Unterschiede bzw. neuen Aspekte eingangen. Insbesondere gelten die Ausführungen und Erläuterungen zu den vorherigen Ausführungsformen auch entsprechend oder ergänzend für die vierte Ausführungsform, auch ohne Wiederholung.

Der Elektromotor 1 bzw. Rotor 2 der vierten Ausführungsform unterscheidet sich von den vorherigen Ausführungsformen vorzugsweise im Wesentlichen durch die Ausgestaltung bzw. Form seines Rotorkerns 40, insbesondere der Sektorabschnitte 42, bzw. der einzelnen Rotorbleche 44.

Bei der vierten Ausführungsform weisen die Sektorabschnitte 42 sich in Umfangsrichtung erstreckende Fortsätze 42C auf, insbesondere an ihrem Außenumfang bzw. ihrer Außenseite 42A, wie insbesondere aus dem vergrößerten Ausschnitt der Fig. 11 ersichtlich ist.

Jeder Sektorabschnitt 42 weist bevorzugt zwei Fortsätze 42C auf und/oder ist zumindest im Wesentlichen ankerförmig ausgebildet.

Vorzugsweise weist der Rotorkern 40 bzw. der jeweilige Sektorabschnitt 42 pro Innenseite 42B einen Fortsatz 42C auf und/oder ist jeder Innenseite 42B (genau) ein Fortsatz 42C zugeordnet.

Der jeweilige Fortsatz 42C erstreckt sich vorzugsweise quer, insbesondere senkrecht, von der jeweiligen Innenseite 42B bzw. ragt quer, insbesondere senkrecht, davon ab, insbesondere an deren radial äußeren Ende.

Die Fortsätze 42C erstrecken sich vorzugsweise in Verlängerung der jeweiligen Außenseite 42A und/oder bilden einen Teil der Außenseite 42A, insbesondere den in Umfangsrichtung bzw. Richtung der Magnetaufnahmen 41 äußeren Bereich der Außenseite 42A.

In der Grundfläche bzw. dem Querschnitt des jeweiligen Sektorabschnitts 42 erstrecken sich die Fortsätze 42C vorzugsweise über die jeweilige (bogenförmige) Außenkontur des Sektorabschnitts 42 hinaus bzw. entlang einer verlängerten Außenkontur.

Die Erstreckung/Länge der Fortsätze 42C in Umfangsrichtung bzw. in Richtung zur jeweiligen Magnetaufnahme 41 ist vorzugsweise größer als 0,5 mm, insbesondere größer als 1 mm und/oder kleiner als 2 mm, insbesondere kleiner als 1,5 mm.

Vorzugweise ragen die Fortsätze 42C in die jeweilige Magnetaufnahme 41 und/oder begrenzen die Fortsätze 42C die jeweiligen Magnetaufnahmen 41 zumindest teilweise in radialer Richtung.

Zwei sich gegenüberliegende Fortsätze 42C von zwei nebeneinander liegenden Sektorabschnitten 42 sind vorzugsweise voneinander beabstandet.

Der Abstand von zwei sich gegenüberliegende Fortsätze 42C von zwei nebeneinander liegenden Sektorabschnitten 42 beträgt vorzugsweise mehr als 2 mm, insbesondere mehr als 3 mm und/oder weniger als 5 mm, insbesondere weniger als 4 mm, besonders bevorzugt etwa 3,5 mm.

Die Fortsätze 42C erstrecken sich vorzugsweise durchgehend in axialer Richtung. Insbesondere werden die Fortsätze 42C durch alle Rotorbleche 44 gebildet bzw. weist jedes Rotorblech 44 entsprechende Fortsätze bzw. Ausformungen zur Bildung der Fortsätze 42C auf.

Die Fortsätze 42C können die jeweiligen radialen Anschläge 45 bzw. Anschlagsflächen 45A bilden. Auf entsprechende Stege 46 kann dann verzichtet werden.

Es ist jedoch bevorzugt, die Stege 46 mit den Nasen 47 auch bei der vierten Ausführungsform vorzusehen bzw. die radialen Anschläge 45 bzw. Anschlagsflächen 45A durch die Stege 46 bzw. deren Nasen 47 zu bilden.

Durch die Stege 46 wird vorzugsweise die Stabilität des Rotorkerns 40 erhöht.

Die Stege 46 sind bei der vierten Ausführungsform vorzugsweise jeweils zwischen zwei sich gegenüberliegenden Fortsätzen 42C benachbarter Sektorabschnitte 42 gebildet. Insbesondere sind jeweils zwei sich gegenüberliegende Fortsätze 42C benachbarter Sektorabschnitte 42 über einen oder meherere Stege 46, beim Darstellungsbeispiel über jeweils drei Stege 46, miteinander verbunden.

Wie auch bei der ersten Ausführungsform sind die Stege 46 vorzugweise durch einzelne Rotorbleche 44 gebildet, die anders als die übrigen Rotorbleche 44 ausgebildet sind. Die Rotorbleche 44, die die Stege 46 bilden bzw. aufweisen, haben vorzugsweise ebenfalls entsprechende Ausformungen/Fortsätze, um die Fortsätze 42C zu bilden, weisen aber zusätzlich zwischen diesen Ausformungen den jeweiligen Steg 46 auf, insbesondere einstückig mit den Ausformungen zur Bildung der Fortsätze 42C.

Beim Darstellungsbeispiel weist der Rotorkern 40 vorzugsweise drei Rotorbleche 44 mit Stegen 46 bzw. jeweils drei Stege 46 pro Magnetaufnahme 41 bzw. Permanentmagnet 30 auf. Es ist jedoch auch möglich, mehr oder weniger Stege 46 vorzusehen, insbesondere in Abhängigkeit von der Höhe des Rotorkerns 40. Auch ist es möglich, wie bereits für die erste Ausführungsform beschrieben, dass ein Steg 46 durch mehrere direkt übereinanderliegende Rotorbleche 44 gebildet wird.

Der Längserstreckung der Stege 46 beträgt jeweils vorzugsweise mehr als 2 mm, insbesondere mehr als 3 mm und/oder weniger als 5 mm, insbesondere weniger als 4 mm, besonders bevorzugt etwa 3,5 mm.

Die Ausführung und Erläuterungen bezüglich der Sektorabschnitte 42 im Zusammenhang mit der ersten Ausführungsform gelten vorzugsweise auch für die vierte Ausführungsform, insbesondere bezüglich der Innenseiten 42B und/oder der Außenseite 42A.

Wie bereits für die erste Ausführungsform beschrieben, ist die Außenseite 42A bzw. deren Außenkontur gekrümmt bzw. bogenförmig.

Vorzugsweise ändert sich beim Darstellungsbeispiel gemäß vierter Ausführungsform die Krümmung bzw. der Krümmungsradius der Außenseite 42A bzw. der Außenkontur der Außenseite 42A.

Vorzugsweise ist die Außenseite 42A bzw. deren Außenkontur zumindest im Bereich der Fortsätze 42C stärker gebogen und/oder weist einen geringeren Krümmungsradius bzw. eine größere Krümmung als im Bereich der Außenseite 42A zwischen den Fortsätzen 42C auf. Insbesondere ist der Krümmungsradius im Bereich der Fortsätze 42C kleiner als der (tatsächliche) Radius des Rotorkerns 40.

Besonders bevorzugt ändert sich die Krümmung bzw. der Krümmungsradius der Außenseite 42A bzw. der Außenkontur der Außenseite 42A kontinuierlich und/oder über die gesamte Breite der Außenseite 42A bzw. über die gesamte Länge der Außenkontur. Bevorzugt weist also auch der Bereich zwischen den Fortsätzen 42C eine sich ändernde Krümmung bzw. einen sich ändernden Krümmungsradius auf.

Vorzugsweise ist der Krümmungsradius an den äußeren Kanten bzw. Enden der Außenseite 42A bzw. Außenkontur und/oder an den Fortsätzen 42C am geringsten und/oder in der Mitte am größten. Vorzugsweise ist die Krümmung an den äußeren Kanten/Enden der Außenseite 42A bzw. Außenkontur und/oder an den Fortsätzen 42C am größten und/oder in der Mitte am geringsten.

Vorzugsweise nimmt der Krümmungsradius von der Mitte zu den Fortsätzen 42C hin ab, insbesondere kontinuierlich.

Vorzugsweise nimmt der Krümmungsradius entlang der Breite der Außenseite 42A bzw. der Länge der Außenkontur zunächst, insbesondere kontinuierlich, zu, und ab der Hälfte bzw. Mitte wieder ab. Vorzugsweise nimmt die Krümmung entlang der Breite der Außenseite 42A bzw. der Länge der Außenkontur zunächst, insbesondere kontinuierlich, ab, und ab der Hälfte bzw. Mitte wieder zu. Die Außenseite 42A bzw. Außenkontur ist also in Richtung ihrer Enden und/oder in Richtung der Fortsätze 42C stärker gebogen.

Der maximale Krümmungsradius eines Sektorabschnitts 42 ist vorzugweise größer als 25 mm oder 30 mm, insbesondere größer als 35 mm, und/oder kleiner als 50 mm oder 45 mm, insbesondere kleiner als 40 mm. Besonders bevorzugt beträgt der maximale Krümmungsradius eines Sektorabschnitts 42 etwa 38,5 mm.

Der Krümmungsradius der Außenseite 42A am Übergang zu den Fortsätzen 42C und/oder der maximale Krümmungsradius eines Fortsatzes 42C ist vorzugweise größer als 5, 8 oder 10 mm und/oder kleiner als 15 mm oder 12 mm. Falls der Rotorkern 40 keine Fortsätze 42C aufweist, ist dies vorzugsweise der minimale Krümmungsradius bzw. der Krümmungsradius an den Kanten der Außenseite 42A.

Der minimale Krümmungsradius eines Fortsatzes 42C bzw. der Außenseite 42A bzw. der Krümmungsradius am äußeren/freien Ende der Außenseite 42A bzw. des Fortsatzes 42C, ist vorzugsweise größer als 0,2 mm und/oder kleiner als 3 mm, 1 mm oder 0,8 mm, insbesondere kleiner oder gleich 0,5 mm.

Ganz besonders bevorzugt folgt die Außenkontur einer inversen Kosinusfunktion und/oder kann durch eine inverse Kosinusfunktion beschrieben werden, insbesondere gemäß der Formel 1/cos(phi). Die Achse der inversen Kosinusfunktion verläuft hierbei vorzugsweise in Zylinderkoordinaten. Mit anderen Worten weist der Sektorabschnitt 42 bzw. die Außenseite 42A bzw. die Außenkontur vorzugsweise eine inverse Kosinuspolschuhgeometrie auf.

Die inverse Kosinusfunktion hat hierbei die oben beschriebenen Eigenschaft eines sich kontinuierlich ändernden Krümmungsradius, wobei sich der Krümmungsradius von einem maximalen Krümmungsradius (an der Stelle phi=0) ausgehend verringert.

Generell kann die zuvor beschriebene Krümmung auch bei Ausführungsformen ohne Fortsätze 42C realisiert und vorteilhaft sein, beispielsweise der ersten Ausführungsform.

Die Sektorabschnitte 42 weisen vorzugsweise eine oder mehrere Aussparungen 42D auf, wie beispielhaft in der Vergrößerung in Fig. 11 gezeigt.

Die Aussparungen 42D sind vorzugsweise jeweils zwischen einer Innenseite 42B und dem davon abragenden Fortsatz 42C gebildet.

Die Aussparungen 42D sind vorzugsweise konkav und/oder erstrecken sich quer zur jeweiligen Innenseite 42B.

Die Aussparungen 42D erstrecken sich vorzugsweise über die gesamte axiale Länge der Sektorabschnitte 42.

Unter einer "Aussparung" ist hier zu verstehen, dass im Vergleich zu einem Sektorabschnitt 42, bei dem die Innenseite 42B direkt bzw. im Wesentlichen orthogonal auf den Fortsatz 42C trifft, Material ausgespart ist bzw. fehlt. Mit anderen Worten ist also an der (axial verlaufenden) Kante zwischen Innenseite 42B und Fortsatz 42C Material ausgespart bzw. die Aussparung 42D gebildet.

Der Sektorabschnitt 42 hat im Bereich der Aussparungen 42D eine geringere Breite (Abstand zwischen den Aussparungen 42C) als ein Sektorabschnitt 42, der im gleichen Bereich (Bereich zwischen Innenseite 42B und Fortsatz 42C) keine Aussparungen 42D aufweist.

Hinter den Aussparungen 42D (radial nach außen) nimmt die Breite des Sektorabschnitts 42 vorzugsweise sprungartig um die Erstreckung der Fortsätze 42C zu.

Der Abstand von zwei gegenüberligenden Aussparungen 42D von zwei benachbarten Sektorabschnitten 42 ist vorzugsweise größer als der Abstand der gegenüberligenden Innenseiten 42B der zwei benachbarten Sektorabschnitte 42. Mit anderen Worten ist die Breite der Magnetaufnahme 41 im Bereich der Aussparungen 42D größer als die Breite der Magnetaufnahme 41 im Bereich der Innenseiten 42B.

Insbesondere ist die Breite der Magnetaufnahme 41, wie zuvor beschrieben, im Bereich der Innenseiten 42B zumindest im Wesentlichen konstant und vergrößert sich demgegenüber im Bereich der Aussparungen 42D, insbesondere um die entsprechenden Erstreckungen der beiden Aussparungen 42D (Erstreckungen in Umfangsrichtung).

Die Breite der Magnetaufnahme 41 vergrößert sich damit vorzugsweise an ihrem radial äußeren Ende und/oder am Übergang von den Innenseiten 42B zu den Aussparungen 42D und/oder zwischen den Innenseiten 42B und den Fortsätzen 42C.

Nach der Montage des Rotors 2 und/oder dem Einsetzen bzw. Verkleben der Permanentmagnete 30, insbesondere nach dem Aushärten des Klebstoffs, wird der Rotor 2 vorzugsweise (aus)gewuchtet.

Mögliche oder bevorzugte Wuchtpositionen bzw. Wuchtbereiche 40A sind vorzugsweise (im Voraus) festgelegt. Eine Wuchtposition bzw. ein Wuchtbereich 40A ist eine (definierte) Stelle am Rotor 2, insbesondere am Rotorkern 40, wo Material entfernt oder hinzugefügt werden kann, um den Rotor 2 auszuwuchten.

Die Wuchtbereiche 40A sind vorzugsweise axial bzw. auf einer oder beiden axialen Stirnseiten des Rotorkerns 40 bzw. auf der Oberseite bzw. der Montageeinrichtung 50 abgewandten Seite des Rotorkerns 40 und/oder auf der Unterseite bzw. der Montageeinrichtung 50 zugewandten Seite des Rotorkerns 40 vorgesehen. Besonders bevorzugt sind auf beiden Seiten Wuchtbereiche 40A vorgesehen. Der Rotor 2 kann also bevorzugt sowohl von der Seite mit Montageeinrichtung 50 als auch von der Seite ohne Montageeinrichtung 50 (aus)gewuchtet sein bzw. werden.

Fig. 10 und 11 zeigen beispielhaft mit gestrichelten Linien derartige (axiale) Wuchtbereiche 40A. Beim Darstellungsbeispiel weist jeder Sektorabschnitt 42 einen oder mehrere (kreisförmige) Wuchtbereiche 40A auf. Besonders bevorzugt weist jeder Sektorabschnitt 42 vier Wuchtbereiche 40A auf, nämlich jeweils zwei an der der Montageeinrichtung 50 zugewandten und jeweils zwei an der der Montageeinrichtung 50 abgewandten Seite. Der dargestellte Rotor 2 weist also vorzugsweise (etwa) 40 verschiedene Wuchtbereiche 40A auf. Hier sind jedoch auch andere Lösungen möglich.

Um den Rotor 2 im montierten Zustand (auch) von unten bzw. der Seite mit Montageeinrichtung 50 auswuchten zu können, weist die Montageeinrichtung 50, insbesondere der Grundkörper 51, vorzugsweise eine oder mehrere Ausnehmungen 51D auf. Besonders bevorzugt weist die Montageeinrichtung 50 bzw. der Grundkörper 51 für jeden Sektorabschnitt 42 eine Ausnehmung 51D auf, wie beispielhaft in Fig. 4 und Fig. 10 dargestellt.

Zusätzlich oder alternativ können auch weitere, nicht dargestellte Bauteile entsprechende Ausnehmungen aufweisen, beispielsweise ein Gehäuse des Elektromotors 1.

Für das Auswuchten wird vorzugsweise zunächst die (Ur-)Unwucht des Rotors 2 gemessen. Eine Unwucht liegt vor, wenn die Rotationsachse A des Rotor 2 nicht einer seiner Hauptträgheitsachsen entspricht.

Wenn die Unwucht bestimmt ist, wird in einem oder mehreren geeigneten Wuchtbereichen 40A Material entfernt und/oder hinzugefügt. Hierdurch wird der Rotor 2 an den entsprechenden Wuchtbereichen 40A leichter oder schwerer, was vorzugsweise die Trägheitsachse(n) verschiebt bzw. die Unwucht ausgleicht oder vermindert.

Der Vorgang des Messens der Unwucht und des Entfernens bzw. Hinzufügens von Material wird vorzugsweise so oft wiederholt, bis die Unwucht des Rotors 2 einen gewünschten Grenzwert unterschreitet.

Besonders bevorzugt erfolgt das Wuchten durch Bohren. Hierbei wird an den entsprechenden Wuchtbereichen 40A eine (axiale) Wuchtbohrung 40B gesetzt, also Material abgetragen bzw. entfernt. Der Rotor 2 bzw. Rotorkern 40 weist also vorzugsweise an einer oder mehreren Stellen bzw. Wuchtbereichen 40A eine Ausbuchtung bzw. Wuchtbohrung 40B auf. Fig. 10 und 11 zeigen den Rotor 2 beispielhaft mit vier Wuchtbohrungen 40B.

Die Wuchtbohrungen 40B werden vorzugsweise durch die Ausnehmungen 51D der Montageeinrichtung 50 und/oder durch andere Ausnehmungen nicht dargestellter Bauteile, wie einem Gehäuse oder Gehäuseteil, gesetzt.

Der Materialauftrag und/oder Materialabtrag, insbesondere die Tiefe der Wuchtbohrungen 40B, kann variabel sein bzw. je nach vorhandener Unwucht unterschiedlich sein.

Die maximale Tiefe der Wuchtbohrungen 40B ist vorzugsweise größer als 4 oder 5 mm und/oder kleiner als 10 oder 8 mm. Besonders bevorzugt liegt die maximale Wuchttiefe zwischen 6 und 7 mm.

Besonders bevorzugt erfolgt das Auswuchten vor dem Magnetisieren der Permanentmagnete 30.

Auch bei den vorher beschriebenen Ausführungsformen können entsprechende Wuchtbereiche 40A bzw. Wuchtbohrungen 40B vorgesehen sein und/oder ein entsprechendes Wuchtverfahren angewandt werden.

Der Rotor 2 bzw. Rotorkern 40 bzw. die Magnetaufnahmen 41 kann/können eine oder mehrere Magneteinführungen 49 aufweisen, wie beispielhaft in Fig. 10 dargestellt. Die Magneteinführungen 49 sind an der offenen Seite bzw. der Montageinrichtung 50 gegenüberliegenden Seite des Rotorkerns 40 / der Magnetaufnahmen 41 angeordnet. Insbesondere sind die Magneteinführungen 49 (jeweils) an den Sektorabschnitt-Innenseiten 42B angeordnet. Durch die Magneteinführungen 49 wird ein Einsetzen der Permanentmagneten 30 erleichtert, insbesondere ein Verkanten der Permanentmagneten 30 beim Einsetzen verhindert.

Die Montageeinrichtung 50 der vierten Ausführungsform ist bevorzugt zumindest im Wesentlichen wie in den vorherigen Ausführungsformen ausgebildet. Beispielhaft ist in den Fig. 10 und 11 eine Montageeinrichtung 50 gezeigt, deren Lüfterabschnitt 53 einen geringeren Durchmesser als in den korrespondierenden Figuren 4 und 5 aufweist. Entsprechend hat der Lüfterabschnitt 53 der vierten Ausführungsform auch weniger Flügel 53A. Hier sind jedoch auch andere Lösungen möglich.

Die Montageeinrichtung 50 der vierten Ausführungsform kann auch bei dem Rotor 2 der ersten Ausführungsform ausgebildet sein bzw. verwendet werden. Umgekehrt kann auch die Montageeinrichtung 50 der ersten Ausführungsform bei dem Rotor 2 der vierten Ausführungsform ausgebildet sein bzw. verwendet werden.

Selbstverständlich ist es auch möglich, bei der vierten Ausführungsform die Montageeinrichtung 50 ohne Lüfterabschnitt 53 und/oder mit Befestigungselementen 56 auszubilden, wie für die zweite und dritte Ausführungsform beschrieben.

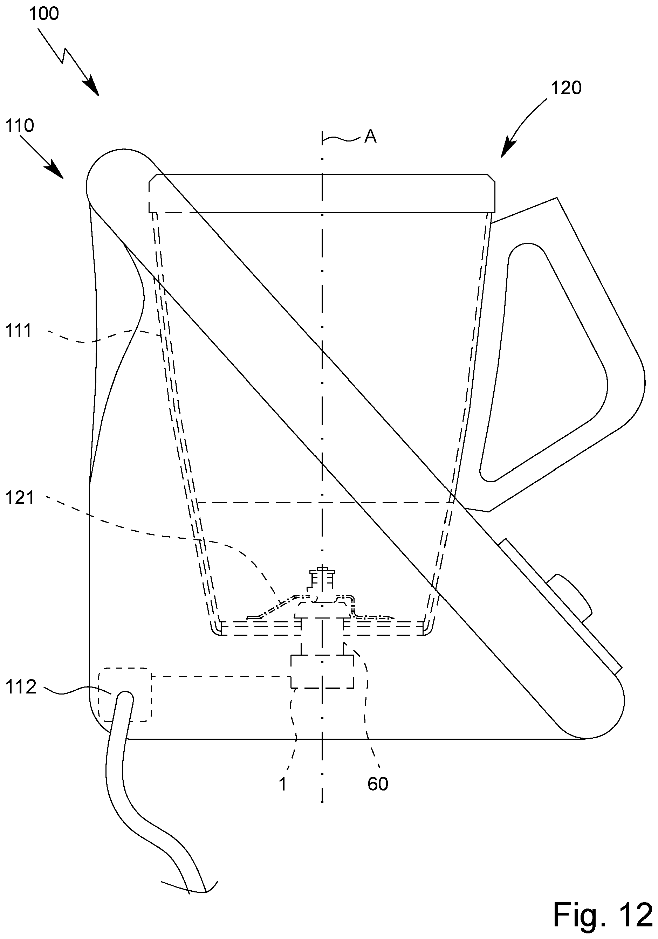

Fig. 12 zeigt schematisch eine vorschlagsgemäße Küchenmaschine 100 zur Zubereitung von Speisen bzw. Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 12 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 60 - optional über einen Wellenaufsatz - mit dem Rührer 121 verbunden oder verbindbar ist und/oder - in der Anschlussposition - von unten formschlüssig in den Boden des Gefäßes 120 eingreift.

Vorzugsweise entspricht die Rotationsachse A des Elektromotors 1 der Drehachse des Rührers 121 und/oder einer Mittelachse des Gefäßes 120, die mittig durch das Gefäß 120 verläuft, wie in Fig. 12 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 mit elektrischem Strom zu versorgen.

Abhängig von der Drehgeschwindigkeit bzw. Drehzahl des Rührers 121 bzw. Elektromotors 1 ist die Küchenmaschine 100 vorzugsweise sowohl zum Rühren (bei kleinen Drehzahlen) als auch zum Zerkleinern (bei großen Drehzahlen) von Zutaten ausgebildet. Besonders bevorzugt ist auch ein langsames Rühren, beispielsweise mit 10 U/min und/oder ein sehr feines bzw. definiertes Zerkleinern, beispielsweise mit 10.000 U/min möglich.

### Bezugszeichenliste:

- 1: Elektromotor
- 10: Stator
- 11: Spule
- 12: Statorkern
- 12A: Statorblech
- 12B: Spulenabschnitt
- 13: Spulenträger
- 14: Anschlusseinrichtung
- 14A: elektrischer Anschluss
- 14B: Anschlussträger

- 20: Rotor

- 30: Permanentmagnet
- 31: Einführschräge
- 32: Flachseite

- 40: Rotorkern
- 40A: Wuchtbereich
- 40B: Wuchtbohrung
- 41: Magnetaufnahme
- 42: Sektorabschnitt
- 42A: Außenseite
- 42B: Innenseite
- 42D: Fortsatz
- 42D: Aussparung
- 43: innerer Abschnitt
- 43A: Öffnung
- 43B: Verbindungsabschnitt
- 44: Rotorblech
- 44A: Stanzbereich
- 45: Anschlag
- 45A: Anschlagfläche
- 46: Steg
- 47: Nase
- 48: Durchbrechung
- 49: Magneteinführung

- 50: Montageeinrichtung
- 51: Grundkörper
- 51A: äußerer Abschnitt
- 51B: innerer Abschnitt
- 51C: Verbindungsabschnitt
- 51D: Ausnehmung
- 52: Fixierelement
- 52A: Kopf
- 52B: Arm
- 52C: Anbindungsabschnitt
- 52D: Anlagefläche
- 52E: Schräge
- 53: Lüfterabschnitt
- 53A: Flügel
- 54: Anschlagelement
- 54A: quer verlaufendes Anschlagelement
- 54B: radial verlaufendes Anschlagelement
- 55: Aufnahmekammer
- 56: Befestigungselement
- 56A: Kopf

- 60: Welle
- 61: Hervorstehung

- 70: Führungseinrichtung
- 71: Ausnehmung
- 72: Führungskante

- 100: Küchenmaschine
- 110: Basisstation
- 111: Aufnahme
- 112: Stromversorgung
- 120: Gefäß
- 121: Rührer
- A: Rotationsachse
- R: Einführrichtung

## Patentansprüche

1. Elektromotor (1), insbesondere für eine Küchenmaschine (100), mit einem Rotor (20) und einem Stator (10),
wobei der Rotor (20) um eine Rotationsachse (A) relativ zum Stator (10) drehbar ist, wobei der Rotor (20) einen Rotorkern (40) aufweist,
wobei der Rotorkern (40) mehrere Sektorabschnitte (42) aufweist, wobei zwischen je zwei Sektorabschnitten (42) eine Magnetaufnahme (41) gebildet ist, in der ein Permanentmagnet (30) angeordnet ist,
wobei jeder Sektorabschnitt (42) zwei Innenseiten (42B) und eine Außenseite (42A) aufweist, wobei die Innenseiten (42B) jeweils einem benachbarten Permanentmagneten (30) zugewandt sind, und wobei die Außenseite (42A) sich zwischen den zwei benachbarten Permanentmagneten (30) erstreckt und von der Rotationsachse (A) abgewandt ist,
wobei die Außenseiten (42A) der Sektorabschnitte (42) sich von ihrer Mitte jeweils in Richtung der benachbarten Permanentmagneten (30) mit kontinuierlich verringerndem Krümmungsradius krümmen, und wobei die Sektorabschnitte (42) konkave Aussparungen (42D) aufweisen, die jeweils zwischen einer der Innenseiten (42B) und einem sich von der Innenseite (42B) quer erstreckenden Fortsatz (42C) gebildet sind,
wobei der Rotorkern (40) durch übereinandergelegte Rotorbleche (44) gebildet ist, wobei Stege (46) durch einzelne Rotorbleche (44) gebildet sind, die anders als die übrigen Rotorbleche (44) ausgebildet sind, und wobei die Stege (46) jeweils radiale Anschlagflächen (45A) für die Permanentmagnete (30) bilden.

2. Elektromotor nach Anspruch 1, wobei die Krümmung der Außenseiten (42A) durch eine inverse Kosinusfunktion beschrieben werden kann.

3. Elektromotor nach einem der voranstehenden Ansprüche, wobei die sich gegenüberliegende Innenseiten (42B) zweier Sektorabschnitte (42) zumindest im Wesentlichen parallel zueinander sind und die dazwischen gebildete Magnetaufnahme (41) seitlich und/oder in Umfangsrichtung begrenzen, so dass die Magnetaufnahme (41) eine zumindest im Wesentlichen konstante Breite hat.

4. Elektromotor nach einem der voranstehenden Ansprüche, wobei die Breite der Magnetaufnahme (41) im Bereich zweier gegenüberliegender Aussparungen (42D) größer ist als im Bereich zweier gegenüberliegender Innenseiten (42B).

5. Elektromotor nach einem der voranstehenden Ansprüche, wobei die gegenüberliegenden Fortsätze (42C) von zwei nebeneinanderliegenden Sektorabschnitten (42) durch die Stege (46) miteinander verbunden sind.

6. Elektromotor nach Anspruch 5, wobei die Fortsätze (42C) durch alle Rotorbleche (44) und die Stege (46) nur durch einzelne Rotorbleche (44) gebildet sind.

7. Elektromotor nach einem der voranstehenden Ansprüche, wobei der Rotorkern (40) eine oder mehrere Wuchtbohrungen (40B) aufweist, die auf einer oder beiden axialen Stirnseiten des Rotorkerns (40) angeordnet sind.

8. Elektromotor nach Anspruch 7, wobei ein Bauteil, insbesondere ein Gehäuseteil und/oder ein Lüfterrad, des Elektromotors (1) Ausnehmungen (51D) aufweist, um die Wuchtbohrungen (40B) durch das Bauteil hindurch zu platzieren.

9. Elektromotor nach einem der voranstehenden Ansprüche, wobei der Rotorkern (40) mehrere Öffnungen (43A) aufweist, die ringförmig um die Rotationsachse (A) zwischen der Rotationsachse (A) und den Sektorabschnitten (42) angeordnet sind, wobei die Öffnungen (43A) in einem zur Rotationsachse (A) orthogonalen Querschnitt zumindest im Wesentlichen rechteckig sind.

10. Elektromotor nach einem der voranstehenden Ansprüche, wobei die Permanentmagnete (30) über den Rotorkern (40) axial überstehen.

11. Elektromotor nach einem der voranstehenden Ansprüche,
wobei der Rotor (20) genau zehn Sektorabschnitte (42) und genau zehn Permanentmagnete (30) aufweist, die auf einem Kreisumfang alternierend angeordnet sind, und/oder
wobei der Rotorkern (40) einen Durchmesser von mindestens 70 mm und/oder höchstens 85 mm hat, und/oder
wobei der Rotorkern (40) eine Höhe von mindestens 15 mm und/oder höchstens 25 mm hat, und/oder
wobei der Rotorkern (40) durch mindestens 35 und/oder höchstens 45 übereinandergelegte Rotorbleche (44) gebildet ist, und/oder
wobei genau drei Rotorbleche (44) Stege (46) aufweisen, die jeweils radialen Anschläge (45) oder radiale Anlageflächen (45A) für die Permanentmagnete (30) bilden, und/oder
wobei jeder Sektorabschnitt (42) genau drei Stanzbereiche (44A) für den Zusammenhalt der Rotorbleche (44) aufweist, und/oder
wobei die Permanentmagnete (30) und/oder die Magnetaufnahmen (41) jeweils eine Breite von mindestens 4 mm und/oder höchstens 6,5 mm haben, und/oder
wobei die Permanentmagnete (30) eine quadratische Grundfläche haben, und/oder
wobei der Rotorkern (40) Wuchtbohrungen (40B) aufweist, wobei jeder Sektorabschnitt (42) maximal zwei Wuchtbohrungen (40B) an seiner Oberseite und/oder maximal zwei Wuchtbohrungen (40B) an seiner Unterseite aufweist.

12. Küchenmaschine (100) mit einem Elektromotor (1) nach einem der voranstehenden Ansprüche.

13. Verfahren zur Herstellung eines Elektromotors (1) nach einem der Ansprüche 1 bis 11 mit einem Stator (10) und einem relativ zum Stator (10) um eine Rotationsachse (A) drehbaren Rotor (20), wobei der Rotor (20) einen Rotorkern (40) mit Magnetaufnahmen (41) aufweist, umfassend:
Einsetzen von permanent magnetisierbaren Bauteilen oder Permanentmagneten (30) in die Magnetaufnahmen (41) und Befestigen, insbesondere Verkleben, der permanent magnetisierbaren Bauteile oder Permanentmagnete (30) mit dem Rotorkern (40),
Auswuchten des Rotors (20) nach dem Einsetzen und Befestigen der permanent magnetisierbaren Bauteile oder Permanentmagneten (30), wobei das Auswuchten durch auf einer oder beiden axialen Stirnseiten des Rotorkerns (40) gesetzte Wuchtbohrungen (40B) erfolgt.

14. Verfahren nach Anspruch 13, wobei die permanent magnetisierbaren Bauteile (30) nach dem Auswuchten des Rotors (20) magnetisiert werden.

15. Verfahren nach Anspruch 13 oder 14, wobei der Elektromotor (1) ein Bauteil, insbesondere ein Gehäuseteil und/oder ein Lüfterrad, aufweist, das vor dem Auswuchten des Rotors (20) montiert wird, wobei die Wuchtbohrungen (40B) durch Ausnehmungen (51D) im Bauteil hindurch gesetzt werden.

## Claims

1. Electric motor (1), in particular for a kitchen machine (100), with a rotor (20) and a stator (10),
wherein the rotor (20) is rotatable about a rotation axis (A) relative to the stator (10), the rotor (20) having a rotor core (40),
wherein the rotor core (40) has a plurality of sector portions (42), wherein a magnet receptacle (41), in which a permanent magnet (30) is arranged, is formed between each two sector portions (42),
wherein each sector portion (42) has two inner sides (42B) and an outer side (42A), the inner sides (42B) each facing an adjacent permanent magnet (30), and the outer side (42A) extending between the two adjacent permanent magnets (30) and facing away from the rotation axis (A),
wherein the outer sides (42A) of the sector portions (42) each curve from their center toward the adjacent permanent magnets (30) with a continuously decreasing radius of curvature, and wherein the sector portions (42) have concave recesses (42D) each formed between one of the inner sides (42B) and an extension (42C) extending transversely from the inner side (42B),
wherein the rotor core (40) is formed by stacked rotor sheets (44), wherein webs (46) are formed by individual rotor sheets (44) that are formed differently from the other rotor sheets (44), and wherein the webs (46) each form radial contact surfaces (45A) for the permanent magnets (30).

2. Electric motor according to claim 1, wherein the curvature of the outer sides (42A) can be described by an inverse cosine function.

3. Electric motor according to one of the preceding claims, wherein the opposing inner sides (42B) of two sector portions (42) are at least substantially parallel to each other and laterally and/or circumferentially delimit the magnet receptacle (41) formed therebetween, so that the magnet receptacle (41) has an at least substantially constant width.

4. Electric motor according to one of the preceding claims, wherein the width of the magnet receptacle (41) in the region of two opposite recesses (42D) is greater than in the region of two opposite inner sides (42B).

5. Electric motor according to one of the preceding claims, wherein the opposing extensions (42C) of two adjacent sector portions (42) are interconnected by the webs (46).

6. Electric motor according to claim 5, wherein the extensions (42C) are formed by all rotor sheets (44) and the webs (46) are formed only by individual rotor sheets (44).

7. Electric motor according to one of the preceding claims, wherein the rotor core (40) has one or more balancing holes (40B) arranged on one or both axial end faces of the rotor core (40).

8. Electric motor according to claim 7, wherein a component, in particular a housing part and/or a fan wheel, of the electric motor (1) has clearances (51D) for placing the balancing holes (40B) through the component.

9. Electric motor according to one of the preceding claims, wherein the rotor core (40) comprises a plurality of openings (43A) arranged annularly around the rotation axis (A) between the rotation axis (A) and the sector portions (42), the openings (43A) being at least substantially rectangular in a cross-section orthogonal to the rotation axis (A).

10. Electric motor according to one of the preceding claims, wherein the permanent magnets (30) project axially beyond the rotor core (40).

11. Electric motor according to one of the preceding claims,
wherein the rotor (20) comprises exactly ten sector portions (42) and exactly ten permanent magnets (30) arranged alternately on a circular circumference, and/or
wherein the rotor core (40) has a diameter of at least 70 mm and/or at most 85 mm, and/or
wherein the rotor core (40) has a height of at least 15 mm and/or at most 25 mm, and/or
wherein the rotor core (40) is formed by at least 35 and/or at most 45 stacked rotor sheets (44), and/or
wherein exactly three rotor sheets (44) have webs (46) which each form radial stops (45) or radial contact surfaces (45A) for the permanent magnets (30), and/or
wherein each sector portion (42) has exactly three punch areas (44A) for holding the rotor sheets (44) together, and/or
wherein the permanent magnets (30) and/or the magnet receptacles (41) each have a width of at least 4 mm and/or at most 6.5 mm, and/or
wherein the permanent magnets (30) have a square base, and/or
wherein the rotor core (40) has balancing holes (40B), each sector portion (42) having a maximum of two balancing holes (40B) on its upper side and/or a maximum of two balancing holes (40B) on its lower side.

12. Kitchen machine (100) with an electric motor (1) according to one of the preceding claims.

13. Method of manufacturing an electric motor (1) according to one of the claims 1 to 11 having a stator (10) and a rotor (20) rotatable relative to the stator (10) about a rotation axis (A), wherein the rotor (20) has a rotor core (40) with magnet receptacles (41), comprising:
inserting permanently magnetizable components or permanent magnets (30) into the magnet receptacles (41) and fixing, in particular adhesively bonding, the permanently magnetizable components or permanent magnets (30) to the rotor core (40),
balancing the rotor (20) after inserting and fixing the permanently magnetizable components or permanent magnets (30), the balancing being performed by balancing holes (40B) placed on one or both axial faces of the rotor core (40).

14. Method according to claim 13, wherein the permanently magnetizable components (30) are magnetized after balancing the rotor (20).

15. Method according to claim 13 or 14, wherein the electric motor (1) comprises a component, in particular a housing part and/or a fan wheel, which is mounted before balancing the rotor (20), wherein the balancing holes (40B) are placed through clearances (51D) in the component.

## Revendications

1. Moteur électrique (1), en particulier pour un robot ménager (100), comprenant un rotor (20) et un stator (10),
le rotor (20) pouvant tourner autour d'un axe de rotation (A) par rapport au stator (10), le rotor (20) présentant un noyau de rotor (40),
le noyau de rotor (40) présentant plusieurs sections de secteur (42), un logement d'aimant (41) étant formé entre chaque fois deux sections de secteur (42), dans lequel est disposé un aimant permanent (30),
chaque section de secteur (42) présentant deux côtés intérieurs (42B) et un côté extérieur (42A), les côtés intérieurs (42B) étant tournés à chaque fois vers un aimant permanent (30) adjacent, et le côté extérieur (42A) s'étendant entre les deux aimants permanents (30) adjacents et étant opposé à l'axe de rotation (A),
les côtés extérieurs (42A) des sections de secteur (42) s'incurvant à partir de leur milieu à chaque fois en direction des aimants permanents (30) adjacents avec un rayon de courbure diminuant en continu, et les sections de secteur (42) présentant des évidements concaves (42D) qui sont formés à chaque fois entre l'un des côtés intérieurs (42B) et un prolongement (42C) s'étendant transversalement à partir du côté intérieur (42B),
le noyau de rotor (40) étant formé par des tôles de rotor (44) superposées, des nervures (46) étant formées par des tôles de rotor (44) individuelles qui sont réalisées différemment des tôles de rotor (44) restantes, et les nervures (46) formant à chaque fois des surfaces de butée radiales (45A) pour les aimants permanents (30).

2. Moteur électrique selon la revendication 1, la courbure des côtés extérieurs (42A) pouvant être décrite par une fonction cosinusoïdale inverse.

3. Moteur électrique selon l'une quelconque des revendications précédentes, les côtés intérieurs (42B) se faisant face de deux sections de secteur (42) étant au moins sensiblement parallèles l'un à l'autre et limitant le logement d'aimant (41) formé entre eux latéralement et/ou dans la direction périphérique, de sorte que le logement d'aimant (41) présente une largeur au moins sensiblement constante.

4. Moteur électrique selon l'une quelconque des revendications précédentes, la largeur du logement d'aimant (41) étant plus grande dans la région de deux évidements (42D) se faisant face que dans la région de deux côtés intérieurs (42B) se faisant face.

5. Moteur électrique selon l'une quelconque des revendications précédentes, les prolongements (42C) se faisant face de deux sections de secteur (42) adjacentes l'une à l'autre étant connectés l'un à l'autre par les nervures (46).

6. Moteur électrique selon la revendication 5, les prolongements (42C) étant formés par toutes les tôles de rotor (44) et les nervures (46) étant formées uniquement par des tôles de rotor (44) individuelles.

7. Moteur électrique selon l'une quelconque des revendications précédentes, le noyau de rotor (40) présentant un ou plusieurs alésages d'équilibrage (40B) qui sont disposés sur un ou les deux côtés frontaux axiaux du noyau de rotor (40).

8. Moteur électrique selon la revendication 7, un composant, en particulier une partie de boîtier et/ou une roue de ventilateur, du moteur électrique (1) présentant des exclusions (51D) pour placer les alésages d'équilibrage (40B) à travers le composant.

9. Moteur électrique selon l'une quelconque des revendications précédentes, le noyau de rotor (40) présentant plusieurs ouvertures (43A) qui sont disposées de manière annulaire autour de l'axe de rotation (A) entre l'axe de rotation (A) et les sections de secteur (42), les ouvertures (43A) étant au moins sensiblement rectangulaires dans une section transversale orthogonale à l'axe de rotation (A).

10. Moteur électrique selon l'une quelconque des revendications précédentes, les aimants permanents (30) faisant saillie axialement au-delà du noyau de rotor (40).

11. Moteur électrique selon l'une quelconque des revendications précédentes,
le rotor (20) présentant exactement dix sections de secteur (42) et exactement dix aimants permanents (30) qui sont disposés en alternance sur une périphérie circulaire, et/ou
le noyau de rotor (40) présentant un diamètre d'au moins 70 mm et/ou d'au plus 85 mm, et/ou
le noyau de rotor (40) présentant une hauteur d'au moins 15 mm et/ou d'au plus 25 mm, et/ou
le noyau de rotor (40) étant formé par au moins 35 et/ou au plus 45 tôles de rotor (44) superposées, et/ou
exactement trois tôles de rotor (44) présentant des nervures (46) qui forment à chaque fois des butées radiales (45) ou des surfaces d'appui radiales (45A) pour les aimants permanents (30), et/ou
chaque section de secteur (42) présentant exactement trois zones estampées (44A) pour la cohésion des tôles de rotor (44), et/ou
les aimants permanents (30) et/ou les logements d'aimant (41) présentant à chaque fois une largeur d'au moins 4 mm et/ou d'au plus 6,5 mm, et/ou
les aimants permanents (30) présentant une surface de base carrée, et/ou
le noyau de rotor (40) présentant des alésages d'équilibrage (40B), chaque section de secteur (42) présentant au maximum deux alésages d'équilibrage (40B) sur son côté supérieur et/ou au maximum deux alésages d'équilibrage (40B) sur son côté inférieur.

12. Robot ménager (100) comprenant un moteur électrique (1) selon l'une quelconque des revendications précédentes.

13. Procédé de fabrication d'un moteur électrique (1) selon l'une quelconque des revendications 1 à 11 comprenant un stator (10) et un rotor (20) pouvant tourner autour d'un axe de rotation (A) par rapport au stator (10), le rotor (20) présentant un noyau de rotor (40) avec des logements d'aimant (41), comprenant:
l'insertion de composants magnétisables en permanence ou d'aimants permanents (30) dans les logements d'aimant (41) et la fixation, en particulier le collage, des composants magnétisables en permanence ou des aimants permanents (30) avec le noyau de rotor (40),
l'équilibrage du rotor (20) après l'insertion et la fixation des composants magnétisables en permanence ou des aimants permanents (30), l'équilibrage s'effectuant par des alésages d'équilibrage (40B) placés sur un ou les deux côtés frontaux axiaux du noyau de rotor (40).

14. Procédé selon la revendication 13, les composants magnétisables en permanence (30) étant magnétisés après l'équilibrage du rotor (20).

15. Procédé selon la revendication 13 ou 14, le moteur électrique (1) présentant un composant, en particulier une partie de boîtier et/ou une roue de ventilateur, qui est monté avant l'équilibrage du rotor (20), les alésages d'équilibrage (40B) étant placés à travers des exclusions (51D) dans le composant.
